# EUROPÄISCHE PATENTSCHRIFT

(11) **EP 0 669 034 B1**
(45) Veröffentlichungstag und Bekanntmachung des Hinweises auf die Patenterteilung: **15.01.1997**
(21) Anmeldenummer: 93924012.3
(22) Anmeldetag: 02.11.1993
(51) Int. Cl.: G08G 1/015, G08G 1/04, G06T 7/20

(54) **VERFAHREN ZUR DETEKTION UND ABSPALTUNG DES SCHATTENS SICH BEWEGENDER OBJEKTE IN EINER DIGITALEN BILDSEQUENZ**
PROCESS FOR DETECTING AND ELIMINATING THE SHADOW OF MOVING OBJECTS IN A SEQUENCE OF DIGITAL IMAGES
PROCEDE DE DETECTION ET D'ELIMINATION DE L'OMBRE D'OBJETS EN MOUVEMENT DANS UNE SEQUENCE D'IMAGES NUMERISEES

(30) Priorität: 10.11.1992 DE 4237906
(43) Veröffentlichungstag der Anmeldung: 30.08.1995
(73) Patentinhaber: SIEMENS AKTIENGESELLSCHAFT, 80333 München (DE)
(72) Erfinder: KILGER, Michael, D-84061 Ergoldsbach (DE)
(86) Internationale Anmeldenummer: DE9301043
(87) Internationale Veröffentlichungsnummer: WO9411852

(56) Entgegenhaltungen:
- EP-A- 0 224 253
- US-A- 4 433 325
- US-A- 5 099 324
- THE IEEE, PROCEEDINGS : ICASSP 87 INT.CONF.ON ACOUSTICS,SPEECH & SIGNAL PROCESSING DALLAS, APRIL 6-9, 1987 KOBATAKE ET AL. "MEASUREMENT OF TWO-DIMENSIONAL 7?MOVEMENT OF TRAFFIC BY IMAGE PROCESSING" PP 614-617.
- TREIZIEME COLLOQUE SUR LE TRAITEMENT DU SIGNAL ET DES IMAGES JUAN-LES-PINS, SEPTEMBER 16-20 1991 PINEAU ET AL. " DETECTION ET SUIVI D'OBJETS PAR ANALYSE DE SEQUENCES D'IMAGES ", PP1125-1128
- IEEE TRANSACTIONS ON INSTRUMENTATION AND MEASUREMENT Bd. 25, Nr. 1 , März 1976 , NEW YORK US Seiten 52 - 55 TASUKU TAKAGI 'OPTICAL SENSING AND SIZE DISCRIMINATION OF MOVING VEHICLES USING PHOTOCELL ARRAY AND TRESHOLD DEVICES'

## Beschreibung

Bei der Verarbeitung digitaler Bildfolgen von Straßenverkehrsszenen für Zwecke der Detektion, Verfolgung und Klassifikation von Fahrzeugen wirkt sich oft störend aus, daß die Fahrzeuge im Falle direkter Sonneneinstrahlung einen Schatten auf die Fahrbahn werfen, welcher nicht auf einfache Weise vom Fahrzeug getrennt werden kann. Hierdurch wird eine Klassifikation von Fahrzeugen nach ihren geometrischen Abmessungen, insbesondere nach ihrer Breite häufig erschwert, wenn nicht unmöglich gemacht.

Bisherige Ansatze zur Lösung dieses Problems greifen auf Fahrzeugmodelle zurück (G.D. Sullivan, K.D. Baker: Model-based vision:using cues to select hypotheses. SPIE Vol. 654 Automatic Optical Inspection (1986), pp. 272-277), welche mit dem Bild zur Übereinstimmung gebracht werden (matching), wodurch eine Abspaltung des Schattens nicht erforderlich ist. Dieser Ansatz hat jedoch den Nachteil, daß er sehr rechenintensiv ist und daß bei dem jetzigen Entwicklungsstand der Bildverarbeitungshardware eine Realisierung solcher Verfahren in Echtzeit innerhalb eines sinnvollen Kostenrahmens nicht möglich erscheint.

Der vorliegenden Erfindung liegt daher die Aufgabe zugrunde, ein Verfahren zur Detektion und Abspaltung des Schattens sich bewegender Objekte in einer digitalen Bildsequenz anzugeben, welches für die Anwendung in den oben erwähnten Bildverarbeitungsverfahren geeignet ist, und welches sich in Echtzeit auf der Grundlage kostengünstiger Hardware Module realisieren laßt. Diese Aufgabe wird erfindungsgemaß durch ein Verfahren zur Detektion und Abspaltung des Schattens sich bewegender Objekte in einer digitalen bildsequenz nach Anspruch 1 gelöst.

Bei diesem Verfahren wird zunächst aus einer Bildsequenz eine Sequenz von Hintergrundbildern ermittelt, welche nur den unbewegten Bildhintergrund der Bildsequenz, nicht aber die bewegten Objekte enthält. Daran anschließend werden Objektkanten aus der Bildsequenz extrahiert, indem zu jedem Bild der Bildsequenz und zu dem jeweils entsprechenden Hintergrundbild der Hintergrundbildsequenz jeweils ein Kantengrauwertbild ermittelt wird. Durch vertikale bzw. horizontale Projektion dieser Kantengrauwertbilder werden jeweils entsprechende vertikale bzw. horizontale Kantenhistogramme zu den Kantengrauwertbildern ermittelt. Kanten, die nicht zu Bewegtobjekten oder Schatten von Bewegtobjekten gehören, werden eliminiert, indem die Kantenhistogramme eines Hintergrundbildes von den entsprechenden Kantenhistogrammen des zum gleichen Zeitpunkt gehörenden Bildes der Bildsequenz substrahiert werden, und indem die auf diese Weise gebildeten Differenzkantenhistogramme einer Schwellwertentscheidung unterworfen werden, wodurch diejenigen Kanten eliminiert werden, welche nicht den eigentlichen Bewegtobjekten, sondern einem Schatten eines sich bewegenden Objektes entsprechen.

Zur Durchführung dieses Verfahrens ist ein wesentlich geringerer Rechenaufwand erforderlich, als zum Matching von Objektmodellen auf Bildbereiche.

Bei einer bevorzugten Ausführungsform der Erfindung werden die Kantengrauwertbilder vor der Ermittelung der Kantenhistogramme binarisiert. Durch diese Maßnahme kann der Rechenaufwand bei der Verarbeitung der Kantenhistogramme weiter reduziert werden.

Eine weitere Verringerung des Rechenaufwandes wird dadurch möglich, daß vor der Durchführung der Schritte b) bis e) des durch Anspruch 1 charakterisierten Verfahrens diejenigen Bildbereiche ermittelt werden, welche bewegten Objekten - ggf. einschließlich ihres Schattens - entsprechen, und bei dem die Schritte b) bis e) nur auf diese Bildbereiche angewendet werden.

Bei einer weiteren bevorzugten Ausführungsform des erfindungsgemäßen Verfahrens werden Kantenhistogramme, die zu ein und demselben Bewegtobjekt gehören, zu einer zeitlichen Folge von Kantenhistogrammen zusammengefaßt und die Elimination von Schattenkanten wird durch eine Identifikation einander entsprechender Kanten verbessert.

Bei einer weiteren bevorzugten Ausführungsform des Verfahrens wird die Elimination der Schattenkanten weiter verbessert, indem Vorwissen über die Seitenlage der Schattenkanten in bezug auf die Objektkanten verwendet wird. Dieses Vorwissen kann bevorzugt dadurch erlernt und fortlaufend überprüft werden, daß die Seitenlage der Schattenkanten in adaptiver Weise aus der Bildfolge ermittelt wird. Durch diese Maßnahme läßt sich die Praxistauglichkeit und Robustheit des erfindungsgemaßen Verfahrens weiter verbessern.

Figur 1 zeigt in schematischer Weise ein Kantengrauwertbild eines Bildes der Bildsequenz mit den zughörigen vertikalen bzw. horizontalen Kantenhistogrammen.

Figur 2 zeigt ein zu einem Hintergrundbild gehörendes Kantengrauwertbild mit den dazu gehörenden horizontalen und vertikalen Kantenhistogrammen.

Figur 3 zeigt schematisch den Zusammenhang zwischen den Kantenhistogrammen des Bildes der Bildfolge und des Hintergrundbildes mit dem Differenzkantenhistogramm und den durch Schwellwertentscheidung ermittelten Kantenhistogramm am Beispiel vertikaler Kantenhistogramme.

Figur 4 zeigt ein Beispiel eines Bildes der Bildsequenz.

Figur 5 zeigt ein Beispiel eines Bewegtobjektbildes, indem die Bewegtobjekte als schwarze Gebiete sichtbar sind.

Figur 6 zeigt die Markierung bewegter Objekte einschließlich ihres Schattens durch einschließende Rechtecke innerhalb eines Bildes der Bildsequenz.

Figur 7 zeigt ein Hintergrundbild zu der betrachteten Bildsequenz.

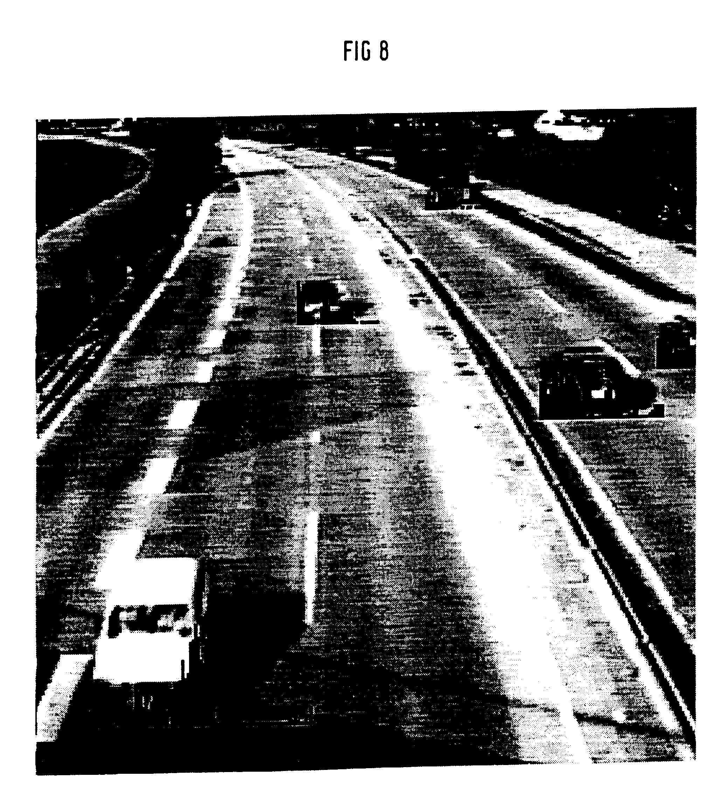

Figur 8 zeigt ein Bild mit der Zuordnung der vertikalen Histogramme zu den Bewegtobjekten.

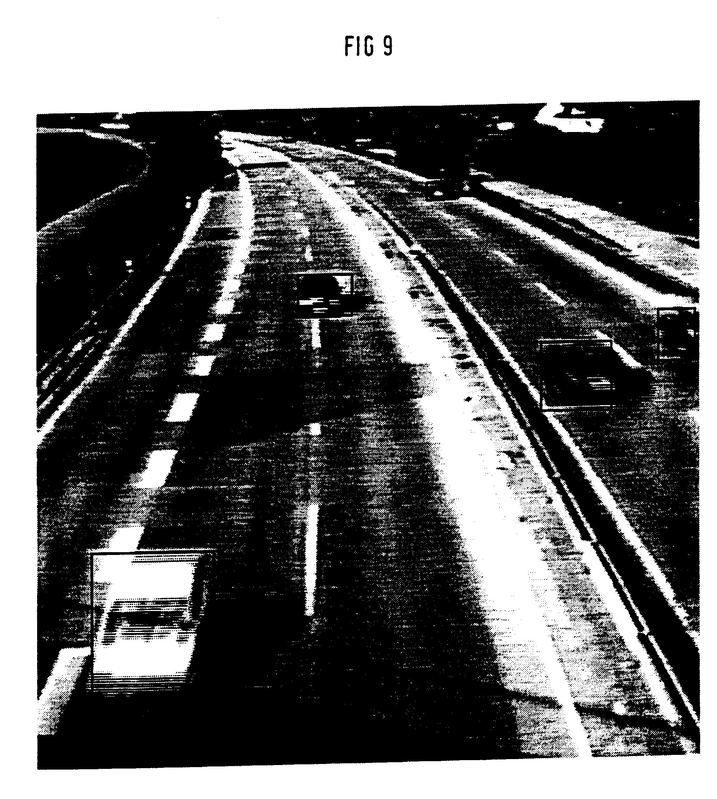

Figur 9 zeigt die Markierung bewegter Objekte unter Ausschluß ihres Schattens durch einschließende Rechtecke in einem Bild der Bildsequenz.

Im folgenden wird die Erfindung durch bevorzugte Ausführungsbeispiele und mit Hilfe der Figuren näher erläutert.

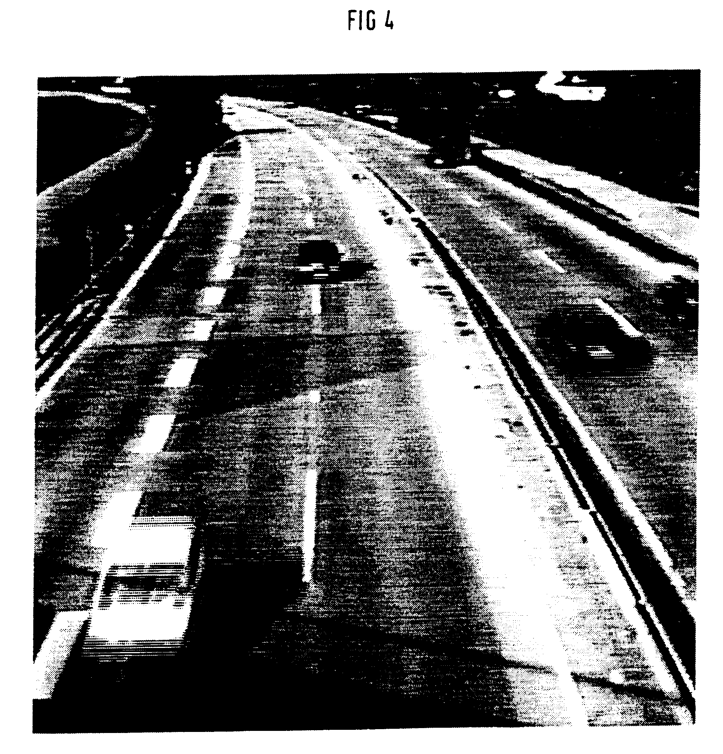

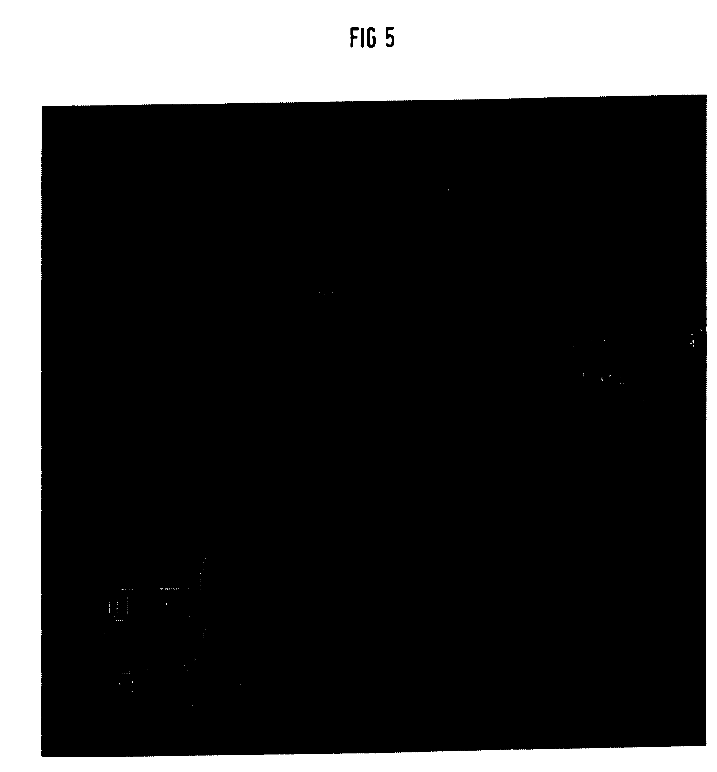

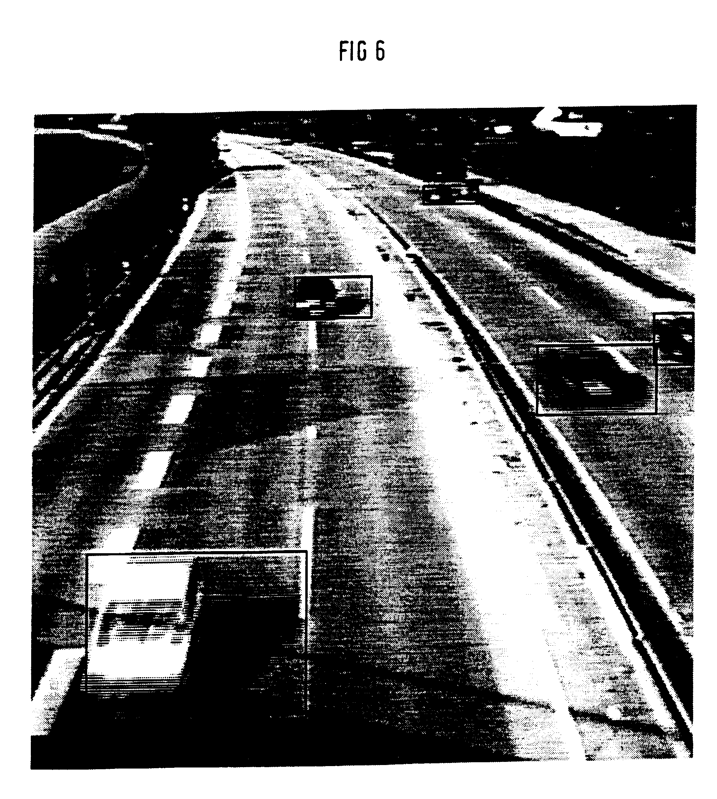

In der Figur 4 ist eine typische Straßenverkehrsszene zu einem bestimmten Zeitpunkt dargestellt, wie sie von einer Kamera, welche (z. B. auf einer Brücke oberhalb der Fahrbahn) aufgebaut ist, aufgenommen wird. Die bewegten Objekte werfen aufgrund des seitlich in diesem Fall von links einfallenden Sonnenlichtes einen deutlich erkennbaren Schatten zu ihrer rechten Seite auf die Fahrbahn. Daß dieser Schatten sich störend auf die Ermittlung der geometrischen Abmessungen, insbesondere der Breite der bewegten Objekte auswirkt, zeigt besonders ein Blick auf Figur 5, in der die bewegten Objekte einschließlich ihrer Schatten als schwarze Markierungen in der Bildebene dargestellt sind. Figur 6 zeigt die sich anhand dieser Verhältnisse ergebenden einschließenden Rechtecke der Bewegtobjekte einschließlich ihrer Schatten, welche zu erheblichen Überschätzungen der Abmessungen der Bewegtobjekte führen.

Aus verschiedenen Veröffentlichungen (W.Feiten et.al.: A video-based system for extracting traffic flow parameters, Proc. 13th DAGM 1991, Munich, pp. 507-514; K.P. Karmann, A.v. Brandt: Moving object segmentation based on adaptive reference images, Proc. of EUSIPCO 1990, Barcelona) sind Verfahren zur Ermittelung von Hintergrundbildsequenzen zu Bildsequenzen bekannt. Diese Hintergrundbildsequenzen haben die Eigenschaft, daß bewegte Objekte, welche in der ursprünglichen Bildsequenz enthalten sind, in dieser Hintergrundbildsequenz nicht enthalten sind.

In dem Dokument The IEEE, Proceedings: ICASSP 87 Int. Conf. on Acoustics, Speech & Signal Processing; Dallas; April 6 - 9, 1987; Kobatake et al.: "Measurement of Two-dimensional Movement of Traffic by Image Processing"; pp. 614 - 617 spielen Schatten von bewegten Objekten eine untergeordnete Rolle, weil es dort nur um eine Klassifizierung nach Fahrzeugklassen geht.

In dem Dokument US-A-4 433 3252 ist eine Möglichkeit angegeben, Schatten bewegter Objekte zu berücksichtigen, doch werden dort dazu u.a. photoelektrische Elemente in der Fahrbahn verwendet.

Dem Dokument "Treizième Colloque sur le Traîtement du Signal et des Images"; Juan-les-Pins; Septembre 16 - 20̸ 1991; Pineau et al.: "Détection et Suivi d'Objets par Analyse de Sequences d"Images"; pp. 1125 - 1128 ist der Hinweis zu entnehmen, aus einer Bildsequenz eine Bildhintergrundsequenz zu ermitteln, die nur den unbewegten Bildhintergrund der Bildsequenz enthält (und aus dieser auf die bewegten Objekte zu schließen).

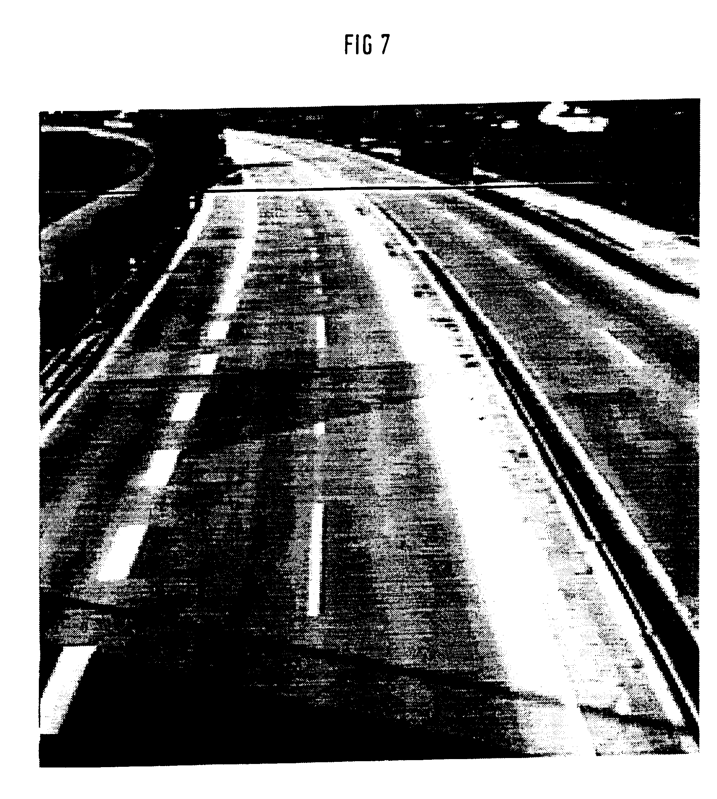

Figur 7 zeigt ein Hintergrundbild zu der durch Figur 4 repräsentierten Bildsequenz. Ein solches Hintergrundbild wird in adaptiver Weise aus der ursprünglichen Bildsequenz berechnet, wodurch alle langsam veränderlichen Änderungen der ursprünglichen Bildsequenz auch in der Hintergrundbildsequenz enthalten sind. Die Berechnung derartiger Hintergrundbildsequenzen ist aus der Literatur bekannt und stellt somit kein besonderes technisches Problem im Zusammenhang mit der vorliegenden Erfindung dar. Wie aus den Figuren 4, 5 und 6 ersichtlich, werden jedoch nicht nur die sich bewegenden Objekte, sondern auch, falls vorhanden, der zu diesen Objekten gehörige Schattenwurf, in diesem Fall auf die Fahrbahn, aus der Hintergrundbildsequenz eliminiert. Aus diesem Grunde sind auch diese Schatten und nicht nur die eigentlichen Bewegtobjekte in den durch Differenzbildung aus der Bildsequenz und der Hintegrundbildsequenz erzeugten Objektbildern enthalten. Um diese Schatten von den eigentlichen Bewegtobjekten zu trennen, wird nun erfindungsgemäß zu jedem Bild der Bildsequenz und auch zu jedem entsprechenden Bild der Hintergrundbildsequenz ein Kantengrauwertbild unter Verwendung bekannter Methoden, die in der Literatur beschrieben sind, berechnet. Eine Reihe von klassischen Verfahren zur Extraktion von Kanten aus digitalen Bildsequenzen wird in dem Buch von Y.Shirai, Three-Dimensional computer vision, Springer Verlag, 1987, besonders auf den Seiten 32 ff. beschrieben. Die Berechnung von Kantengrauwertbildern stellt somit im Zusammenhang mit der vorliegenden Erfindung kein technisches Problem dar.

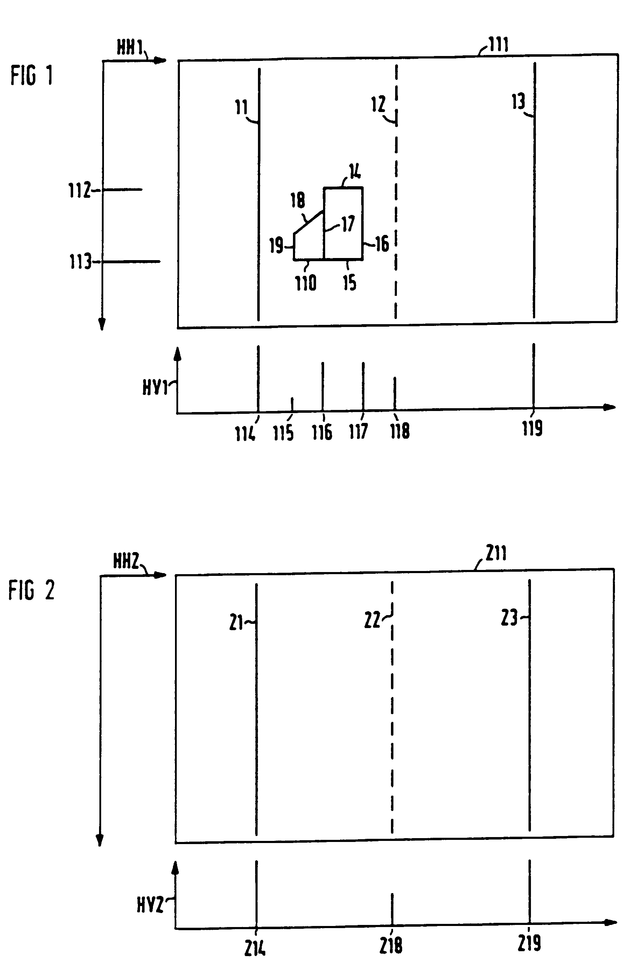

Figur 1 zeigt den typischen Verlauf der Kanten in einem Bild der Bildsequenz zu einer Straßenverkehrsszene. Die Kanten 11, 12 und 13 markieren die Fahrbahnrander bzw. Fahrbahnmitte, die Kanten 14 bis 17 markieren ein auf der linken Fahrbahn sich bewegendes Objekt und die Kanten 18, 19 und 110 markieren die Ränder des zu dem Objekt gehörenden Schattenwurfs. Unterhalb bzw. links neben dem schematisch dargestellten Kantengrauwertbild sind die zugehörigen horizontalen (HH1) bzw. vertikalen (HV1) Kantenhistogramme dargestellt. Derartige Kantenhistogramme werden mit Standardverfahren aus dem Kantengrauwertbild ermittelt, die im Bereich der Bildverarbeitung jedem Fachmann ohne weiteres geläufig sind und deshalb im Zusammenhang mit der vorliegenden Erfindung keiner weiteren Darstellung bedürfen. Diese Kantenhistogramme werden durch vertikale bzw. horizontale Projektion des Kantengrauwertbildes, d. h. durch Aufsummation der Grauwerte längs der entsprechenden Zeilen und Spalten des digitalen Bildes ermittelt.

Figur 2 zeigt in schematischer Weise das Kantengrauwertbild zum entsprechenden Hintergrundbild, in dem lediglich die Kanten der Fahrbahnrandmarkierungen und der Fahrbahnmitte zu sehen sind, nicht aber die Kanten des Bewegtobjekts und seines Schattens. Dementsprechend enthalten die zugehörigen Kantenhistogramme weniger bzw. gar keine Linien.

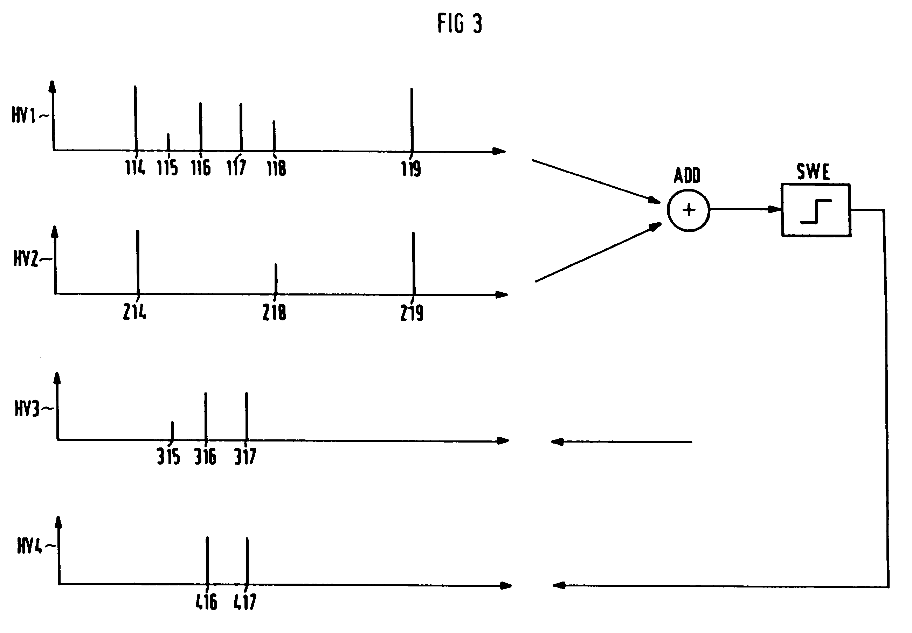

Figur 3 zeigt nun am Beispiel vertikaler Histogramme, wie die in Figur 1 bzw. 2 dargestellten Histogramme voneinander subtrahiert und einer Schwellwertentscheidung unterworfen werden, wodurch die in Figur 3 dargestellten Histogramme HV3 bzw. HV4 gebildet werden. Das Histogramm HV3 enthalt nur noch die Kanten des Bewegtobjekts und seines Schattens und das Histogramm HV4 enthält, nachdem die Schattenkante durch Schwellwertentscheidung beseitigt wurde, ausschließlich die zum Bewegtobjekt gehörigen Kanten.

Nach dieser Elimination der Schattenkanten lassen sich die eigentlichen Bewegtobjektkanten in den Kantengrauwertbildern und auch in den ursprünglichen Bildern der Bildsequenz sehr leicht auffinden, wodurch eine korrekte Ermittlung der geometrischen Abmessungen der Bewegtobjekte sehr einfach möglich ist.

Bei einem bevorzugten Ausführungsbeispiel des erfindungsgemaßen Verfahrens werden die Kantengrauwertbilder vor der Ermittelung der Kantenhistogramme mit Standardverfahren der Bildverarbeitung binarisiert. Es ist einleuchtend, daß auf diese Weise die Menge der zu verarbeitenden Daten entscheidend reduziert werden kann und daß die Berechnung der Histogramme aus den Bildern hierdurch vereinfacht wird. Ein weiterer Vorteil einer Binarisierung ist in einer möglichen Reduktion des Einflusses von statistischen Rauschprozessen zu sehen, welche möglicherweise in dem ursprünglichen Bildmaterial enthalten sein können.

Bei einem weiteren Ausführungsbeispiel der Erfindung wird die Durchführung der Schritte b) bis e) des Anspruchs 1 auf diejenigen Bildbereiche beschränkt, welche bewegten Objekten - ggf. einschließlich ihres Schattens - entsprechen. Solche Bildbereiche sind in Figur 5 als schwarze Bereiche markiert. In einer Variante des erfindungsgemäßen Verfahrens können anstelle der in Figur 5 schwarz markierten Bildbereiche auch die einhullenden Rechtecke dieser Bildbereiche verwendet werden.

In einer bevorzugten Ausführungsform des erfindungsgemäßen Verfahrens werden Schatten- und oder Objektkanten zeitlich verfolgt. Hierduch ist eine Verbesserung der Kantenklassifikation bei gleichzeitiger Reduktion des Rechenaufwandes möglich. Dazu werden zeitliche Folgen von horizontalen bzw. vertikalen Kantenhistogrammen gebildet, in denen entsprechende Kanten identifiziert werden und ihre Bewegung im Laufe der Zeit verfolgt wird. Für diesen Zweck können verschiedenartige Verfahren zur Verfolgung von Objekten in zeitlichen Bildfolgen eingesetzt werden, wie sie aus der Literatur bekannt sind (z.B. W. Feiten et. al., 1991).

Um die Leistungsfähigkeit des Verfahrens weiter zu verbessern und den Rechenaufwand so weit wie möglich zu reduzieren, verwendet ein weiteres bevorzugtes Ausführungsbeispiel des erfindungsgemäßen Verfahrens Vorwissen über das Auftreten und die Seitenlage von Schattenwürfen an Objektkanten. Dazu wird eine hierarchische Systemarchitektur mit typischerweise drei Hierarchieebenen verwendet. Die höchste Verarbeitungsebene verwendet Wissen über das Kalenderdatum und die Uhrzeit um die Möglichkeit des Auftretens von Schattenwürfen zu beurteilen. Wenn also aufgrund der Jahres- bzw. Tageszeit das Auftreten von Schattenwürfen ausgeschlossen ist, verzichtet das Verfahren auf eine entsprechende Analyse. Andernfalls analysiert eine darunterliegende Verarbeitungsebene die Bewegtobjekte hinsichtlich typischer Attribute, wie z.B. abnorme Werte für die Objekthöhe oder Objektbreite. Dabei wird die erwartete Schattenrichtung und Seitenlage sowie die wahrscheinliche Schattenform zu einer Verbesserung der Suche nach Schattenkanten in der Nahe eines detektierten Objekts herangezogen.

Eine dritte, darunterliegende Verarbeitungsebene sorgt für die Verarbeitung von Vorwissen, welches durch die Analyse zeitlich vorhergehender Bilder, also in adaptiver Weise, erworben wurde. Jeder Schatten, welcher in einem der vorhergehenden Bilder detektiert wurde, hat mit großer Wahrscheinlichkeit einen Nachfolger in einem der folgenden Bilder. Durch eine entsprechende zeitliche Verfolgung von Schattenkanten kann die Leistungsfähigkeit des Verfahrens beträchtlich gesteigert werden.

Bei der Verfolgung der Objekte durch die zeitliche Folge digitaler Bilder werden deren Positionen für zukünftige Zeitpunkte vorausberechnet. Dabei werden u.a. vorzugsweise die folgenden Objekteigenschaften protokolliert:
- momentane Position
- vorhergesagte Position in einem zukünftigen Bild
- momentane Geschwindigkeit
- vorhergesagte Geschwindigkeit in einem zukünftigen Bild
- Objektbreite und
- eine Plausibilität.

Zur Verfolgung geometrischer Objekteigenschaften werden dabei bevorzugt Weltkoordinaten (im Gegensatz zu Bildkoordinaten) verwendet. Die Objektabmessungen werden bevorzugt mit Hilfe von umschreibenden Rechtecken protokolliert. Zur zeitlichen Verfolgung aller Attribute und Parameter werden bevorzugt Kalman-Filter eingesetzt.

Eine korrekte Separation der Schatten von den entsprechenden Objekten erfordert die Verwendung von Wissen über die Schattenrichtung, welches sich aus dem Kalenderdatum, der Uhrzeit und aus geometrischen Einflußgrößen der Straßenverkehrsszene ergibt. Ist beispielsweise bekannt, daß die Schatten auf den rechten Seiten der Bewegtobjekte liegen, beginnt die Kantenextraktion auf dieser Seite eines Segments und erzeugt die entsprechenden Kantenhistogramme.

Nachdem die Schatten von den Objekten separiert wurden, kann die Objektgeometrie (z.B. Breite, Höhe) zutreffend ermittelt und eine Objektbeschreibung erstellt werden. Aus der ermittelten Schattenrichtung können die geometrischen Verhältnisse der Straßenverkehrsszene ermittelt und zur Verbesserung nachfolgender Verarbeitungsschritte verwendet werden. Schließlich können verschiedene Parameter des Verfahrens und der bildgebenden Hardware unter Berücksichtigung der Tatsache, daß die Fahrzeuge starre Objekte sind, optimiert und eingestellt werden.

In dieser Beschreibung wurden folgende Veröffentlichungen zitiert:
G.D. Sullivan, K.D. Baker: Model-based vision:using cues to select hypotheses. SPIE Vol. 654 Automatic Optical Inspection (1986), pp. 272-277
W.Feiten et.al.: A video-based system for extracting traffic flow parameters, Proc. 13th DAGM 1991, Munich, pp. 507-514
K.P. Karmann, A.v. Brandt: Moving object segmentation based on adaptive reference images, Proc. of EUSIPCO 1990, Barcelona
Y.Shirai, Three-Dimensional computer vision, Springer Verlag, 1987
The IEEE, Proceedings: ICASSP 87 Int. Conf. on Acoustics, Speech & Signal Processing; Dallas; April 6-9, 1987; Kobatake et al.: "Measurement of Two-dimensional Movement of Traffic by Image Processing"; pp. 614 - 617
US-A-4 433 325
Treizieme Colloque sur le Traîtement du Signal et des Images; Juan-les-Pins; Septembre 16 - 20̸ 1991; Pineau et al.: "Detection et Suivi d'Objets par Analyse de Sequences d'Images"; pp. 1125 - 1128

Der vorliegenden Beschreibung folgen Listings von Computerprogrammen bzw. Programm-Modulen, welche zu einer Durchführung der vorstehend beschriebenen Verfahren auf einer elektronischen Rechenanlage benutzt werden können.

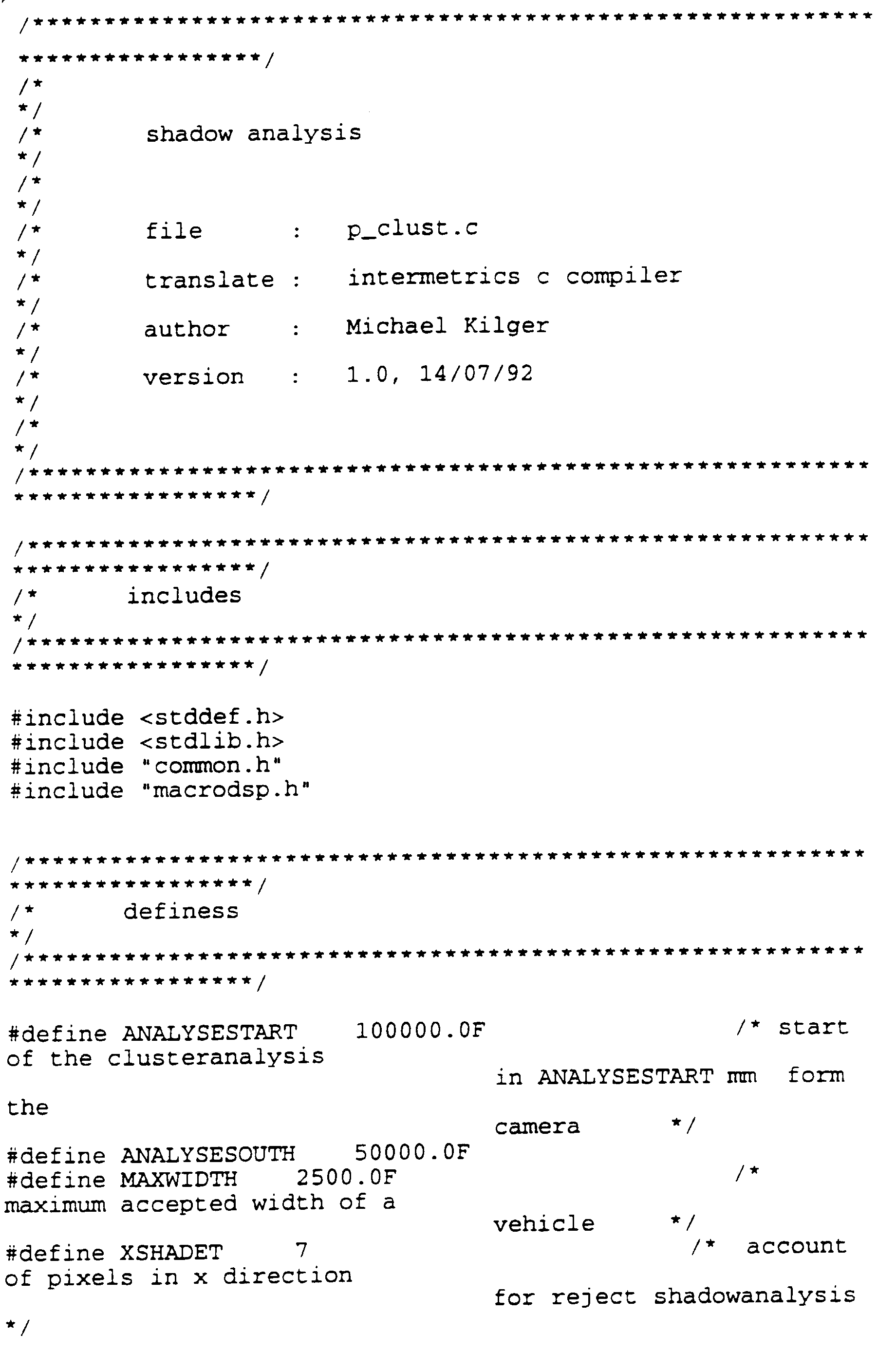

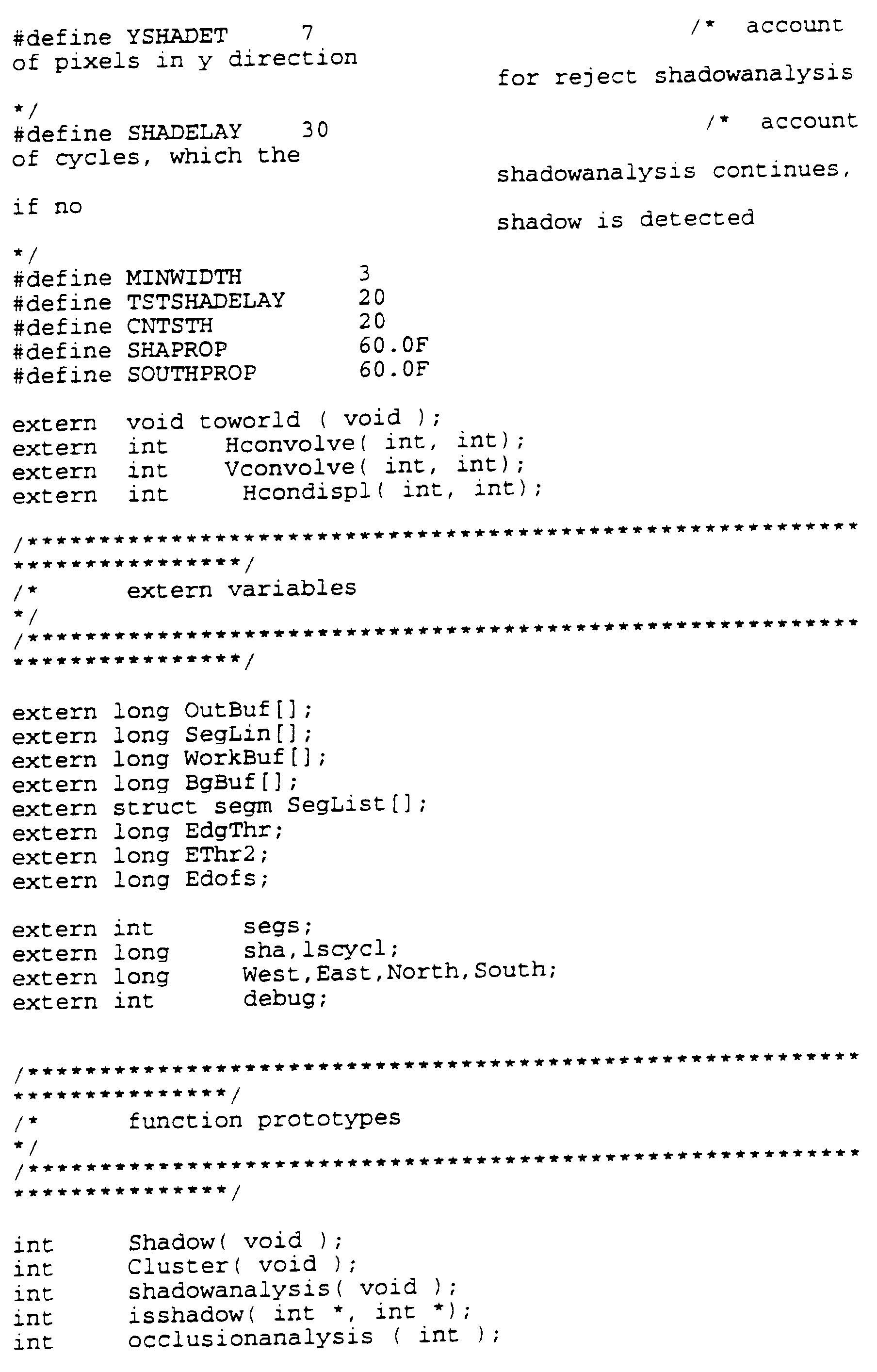

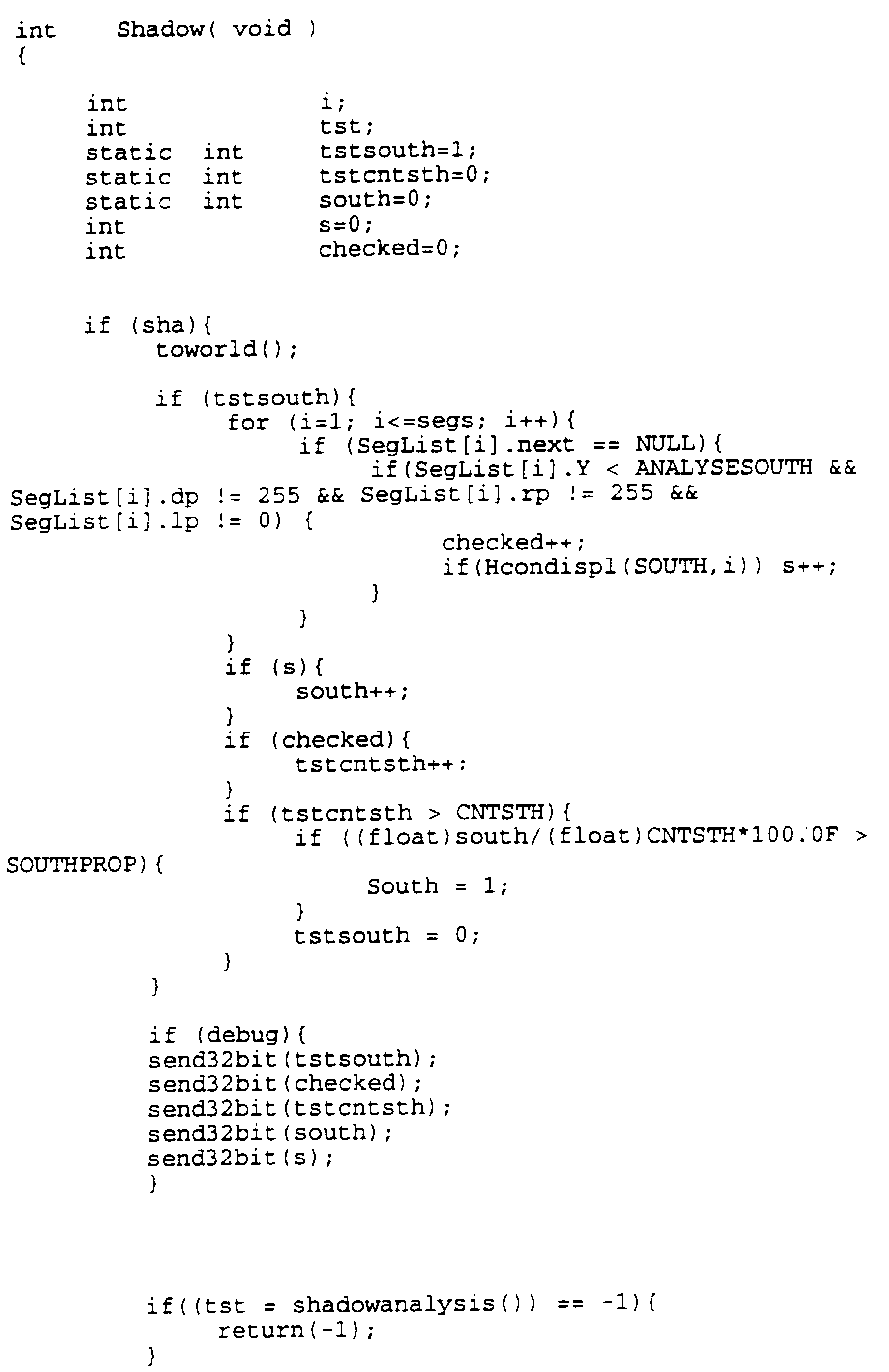

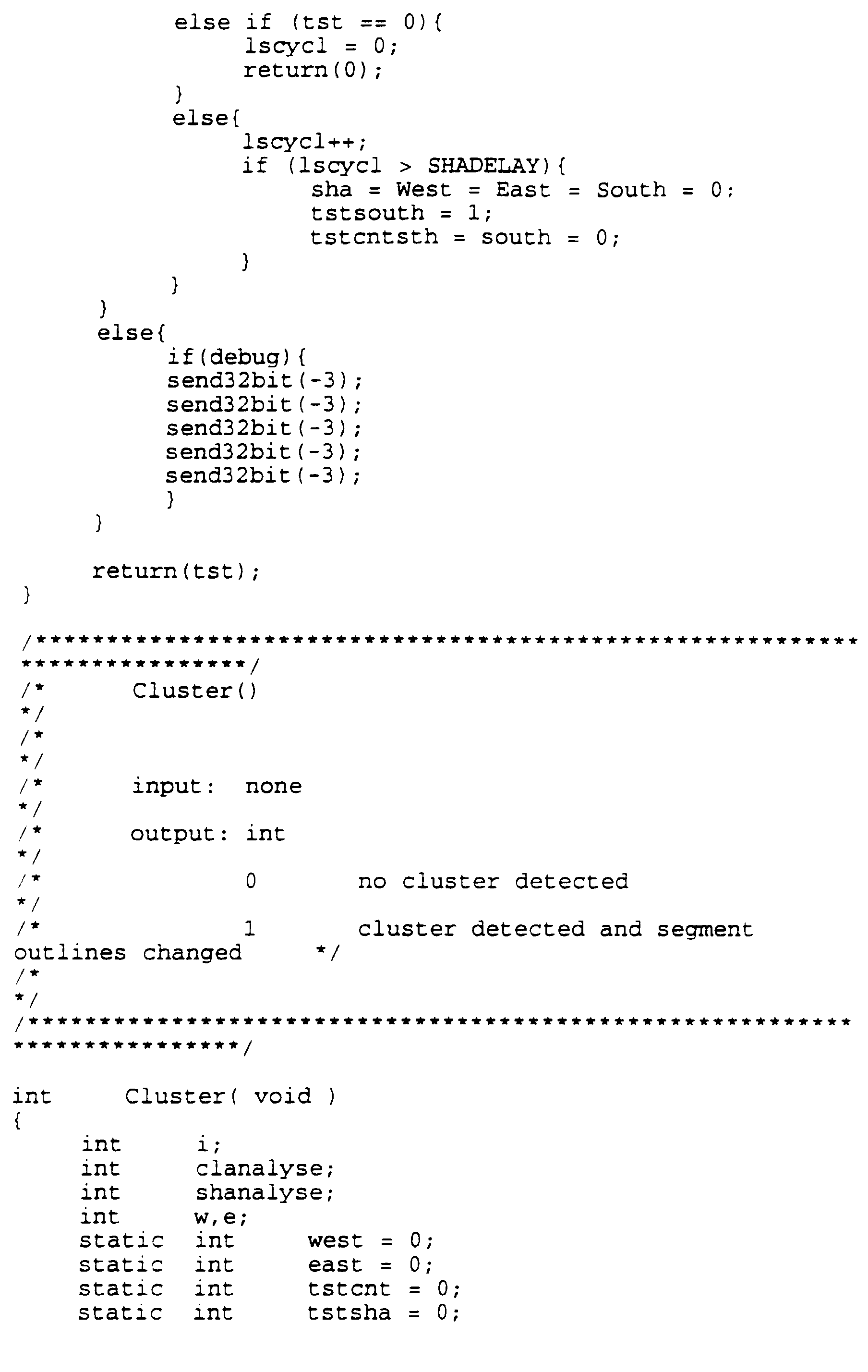

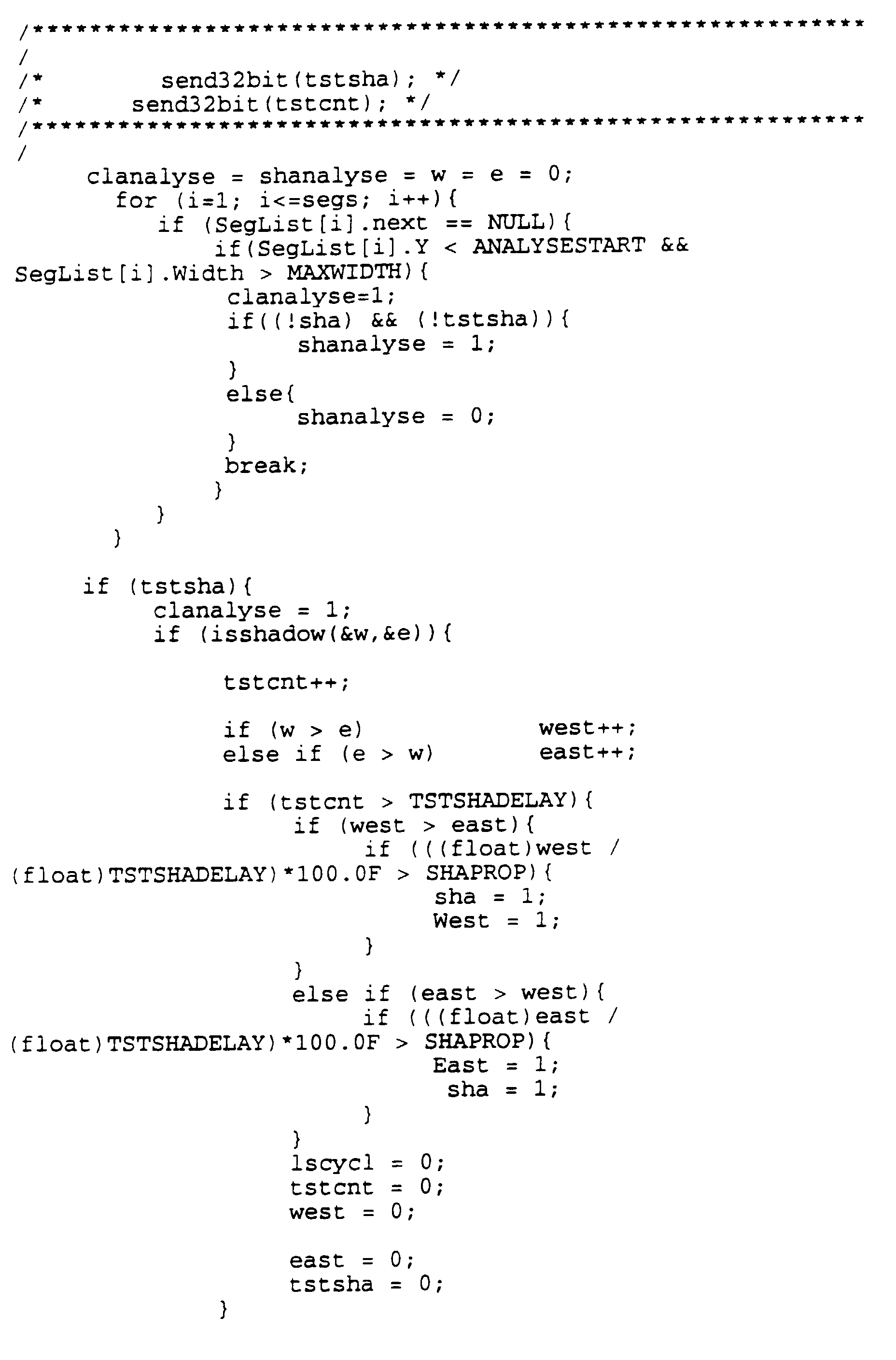

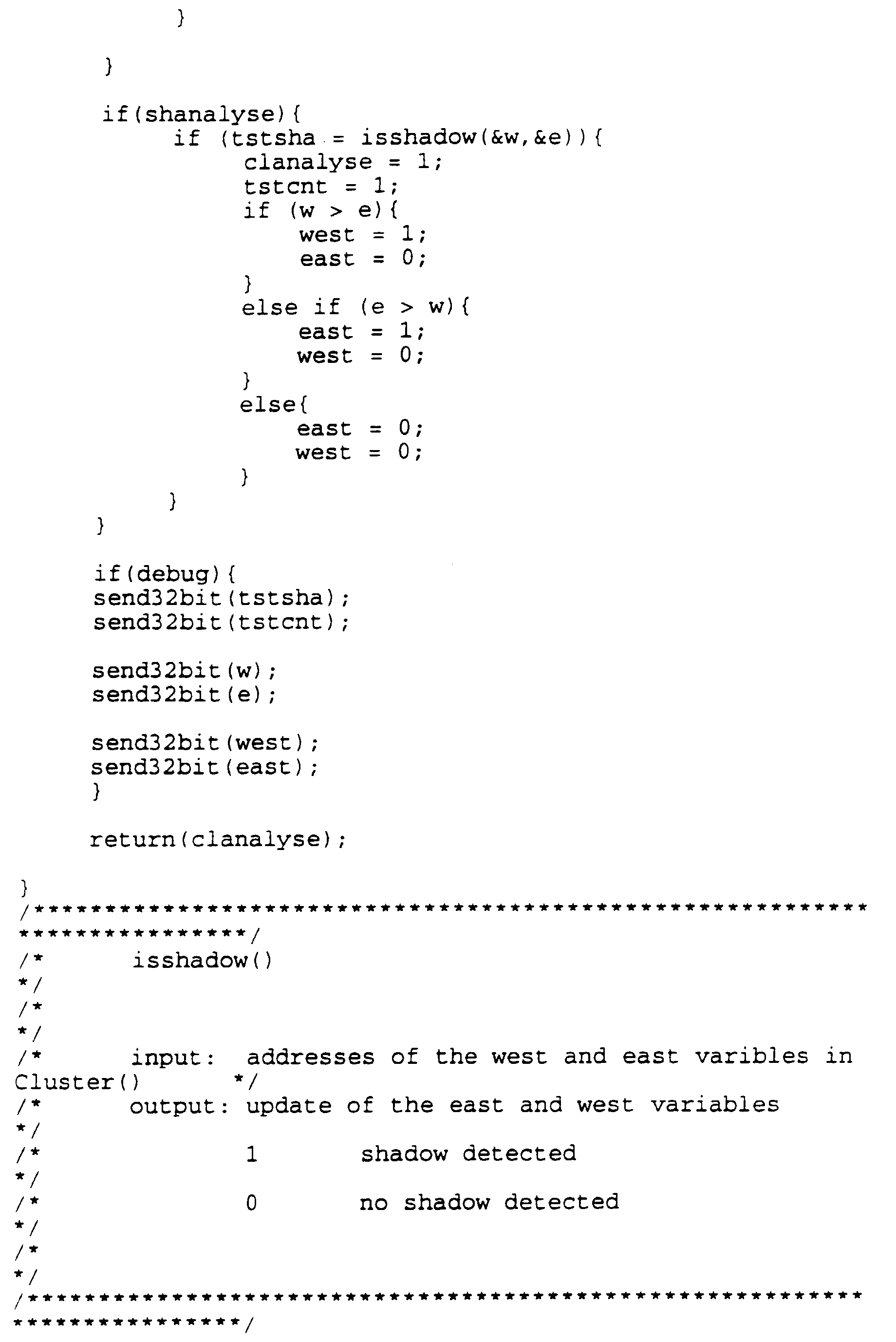

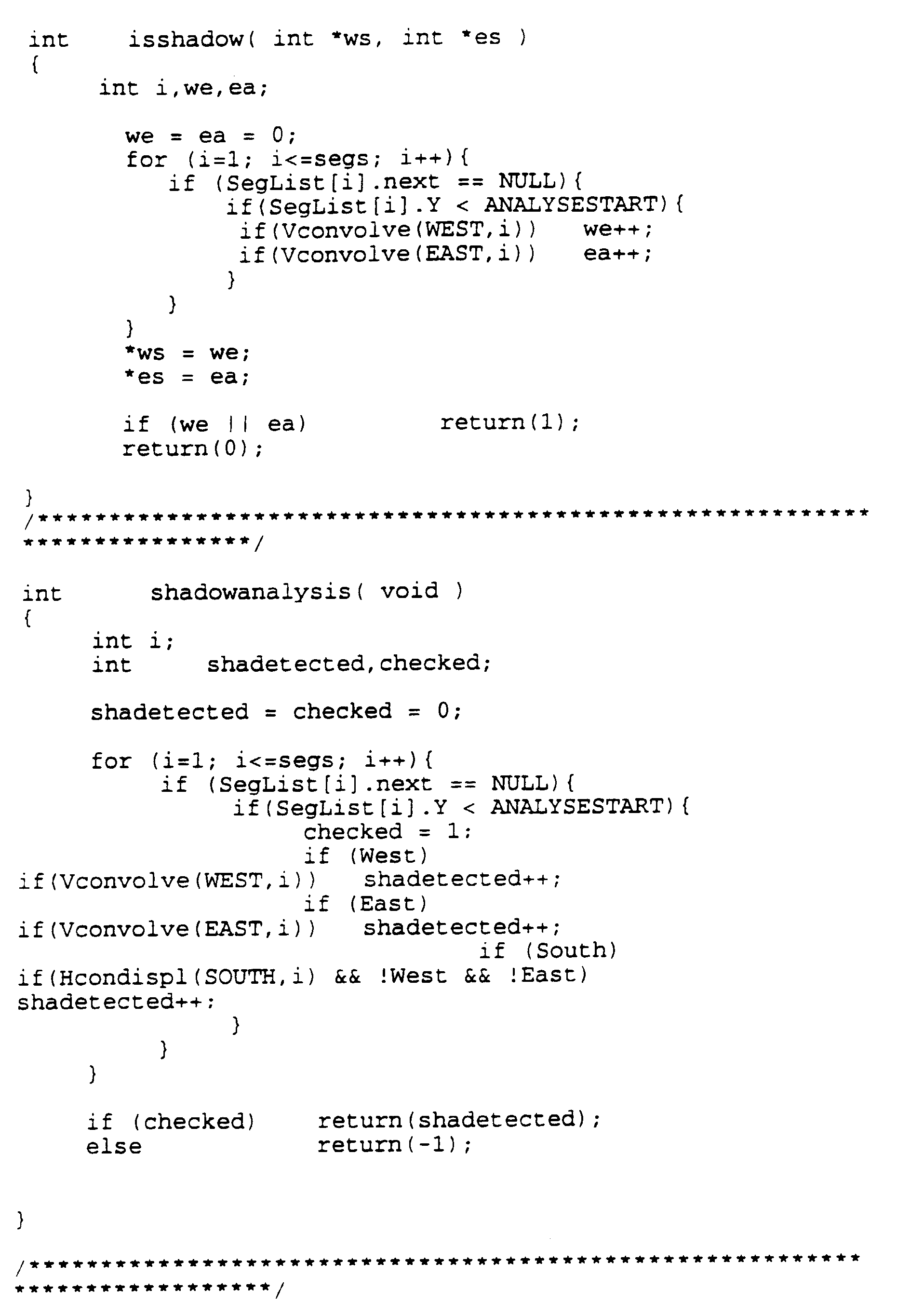

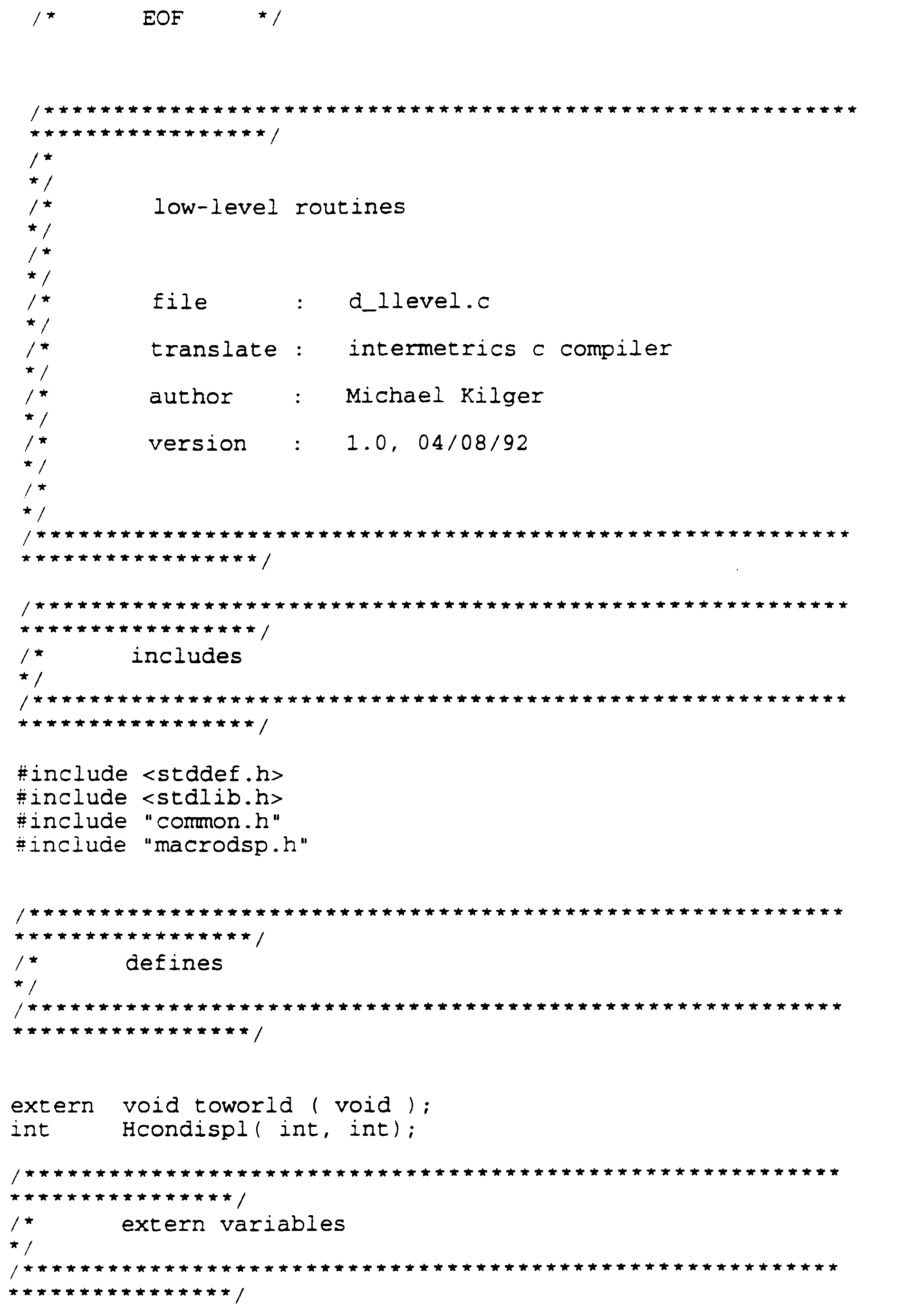

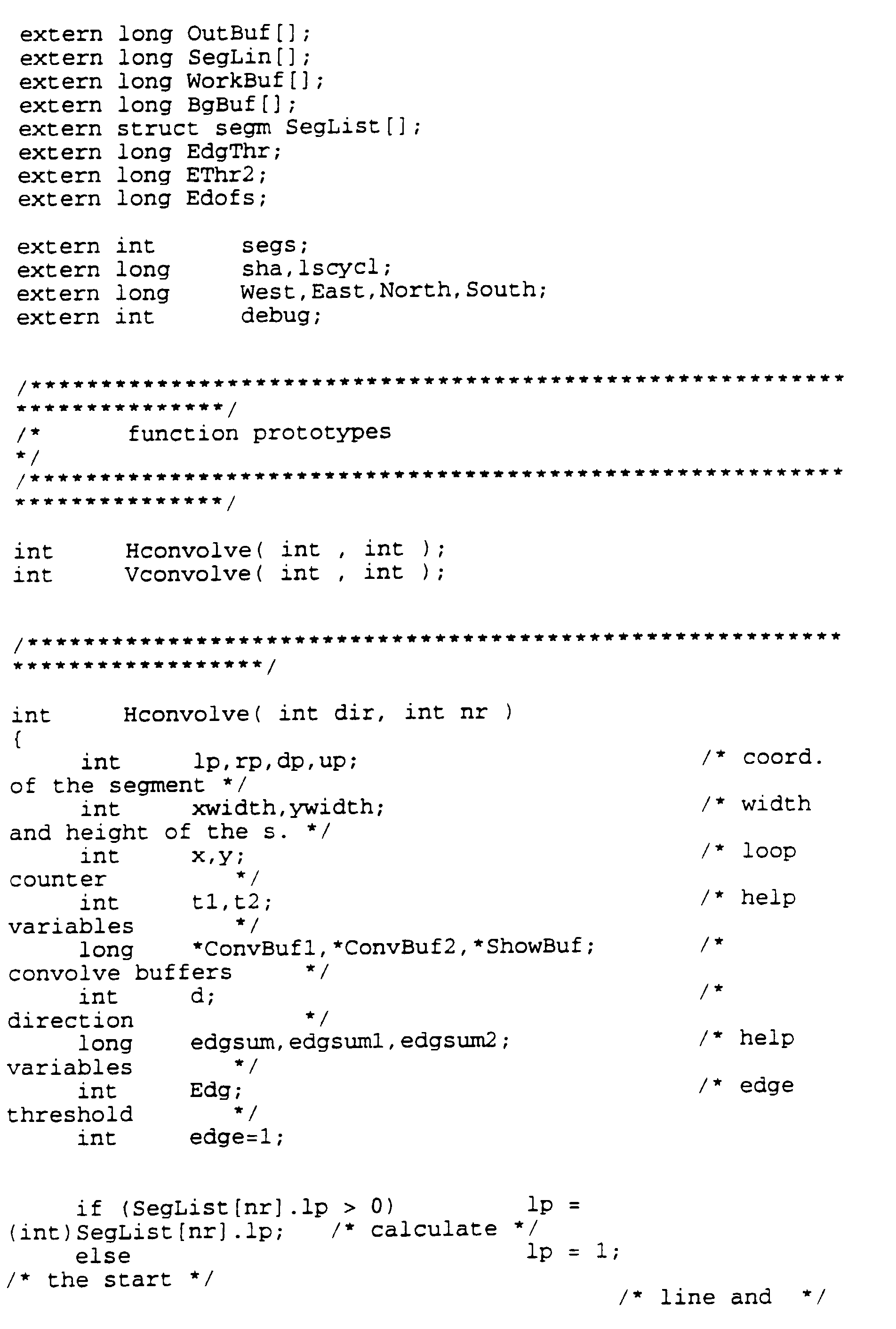

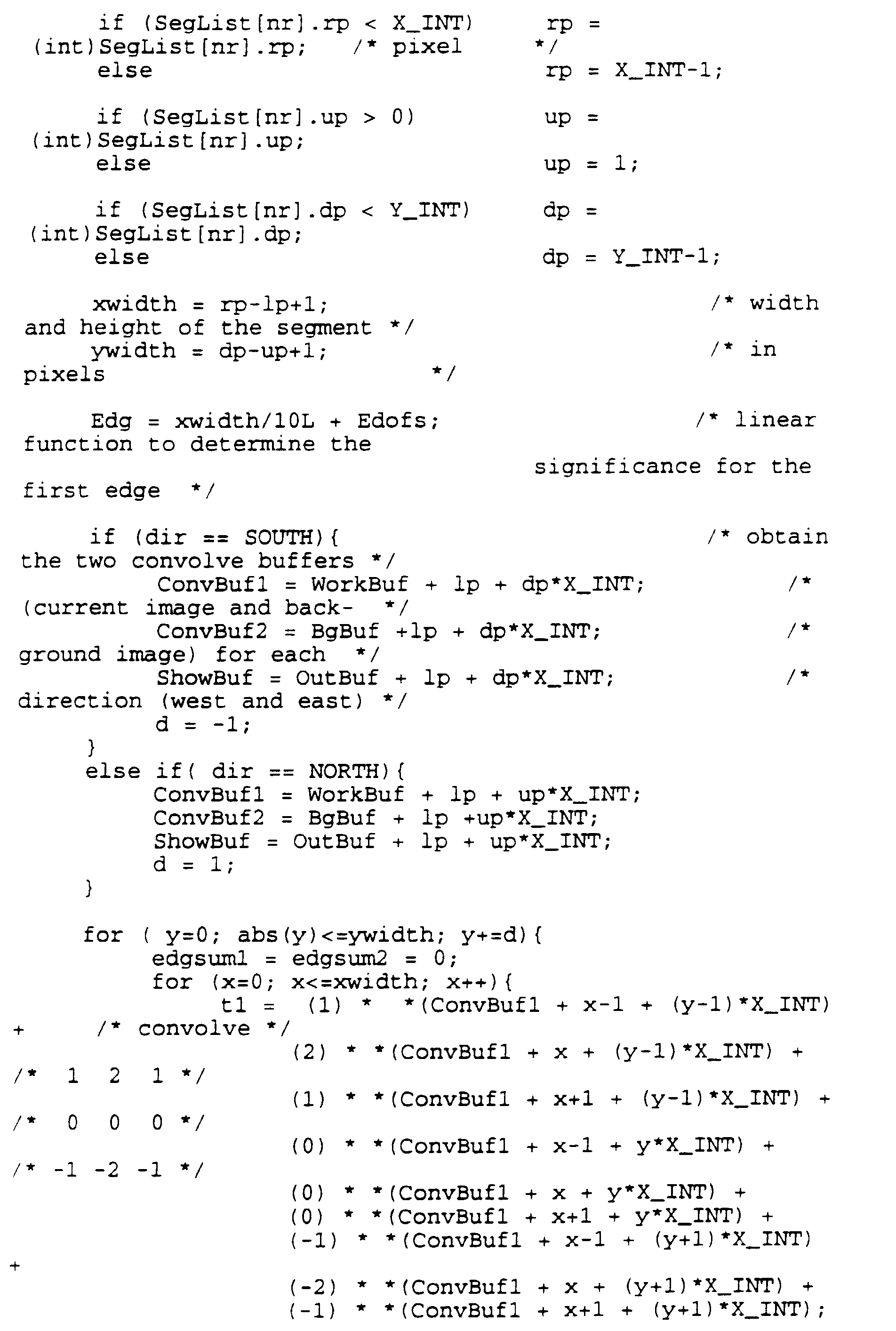

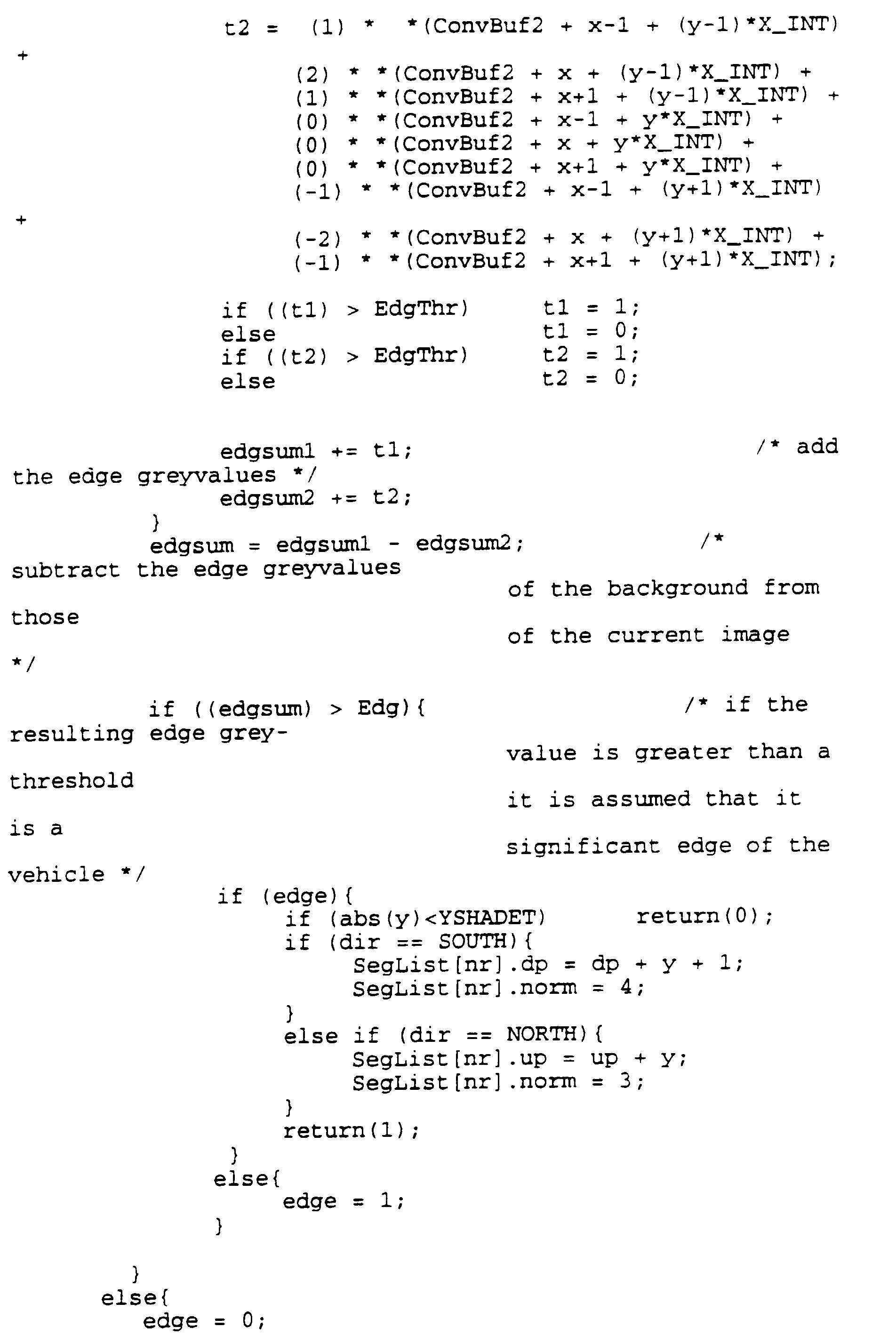

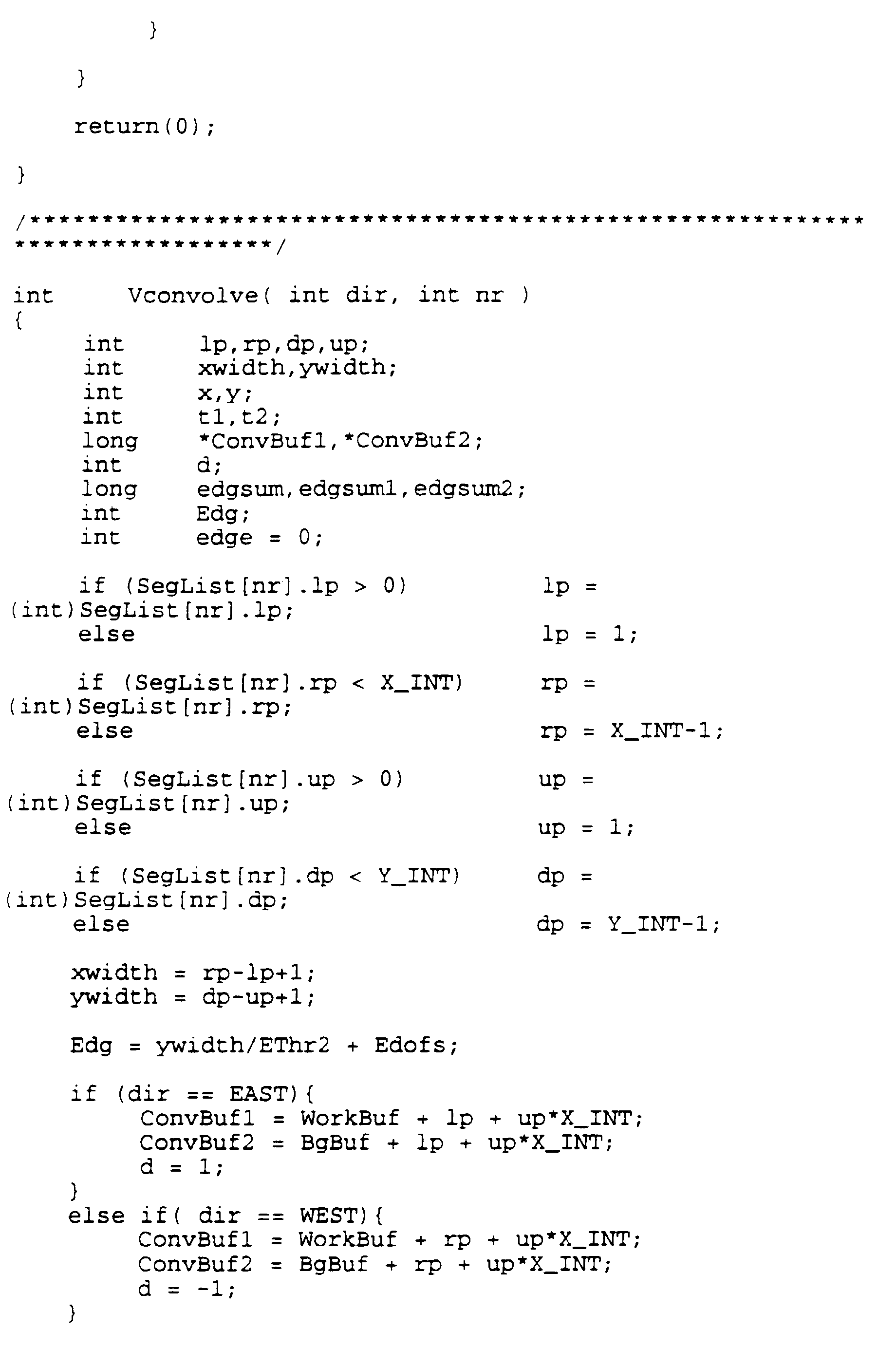

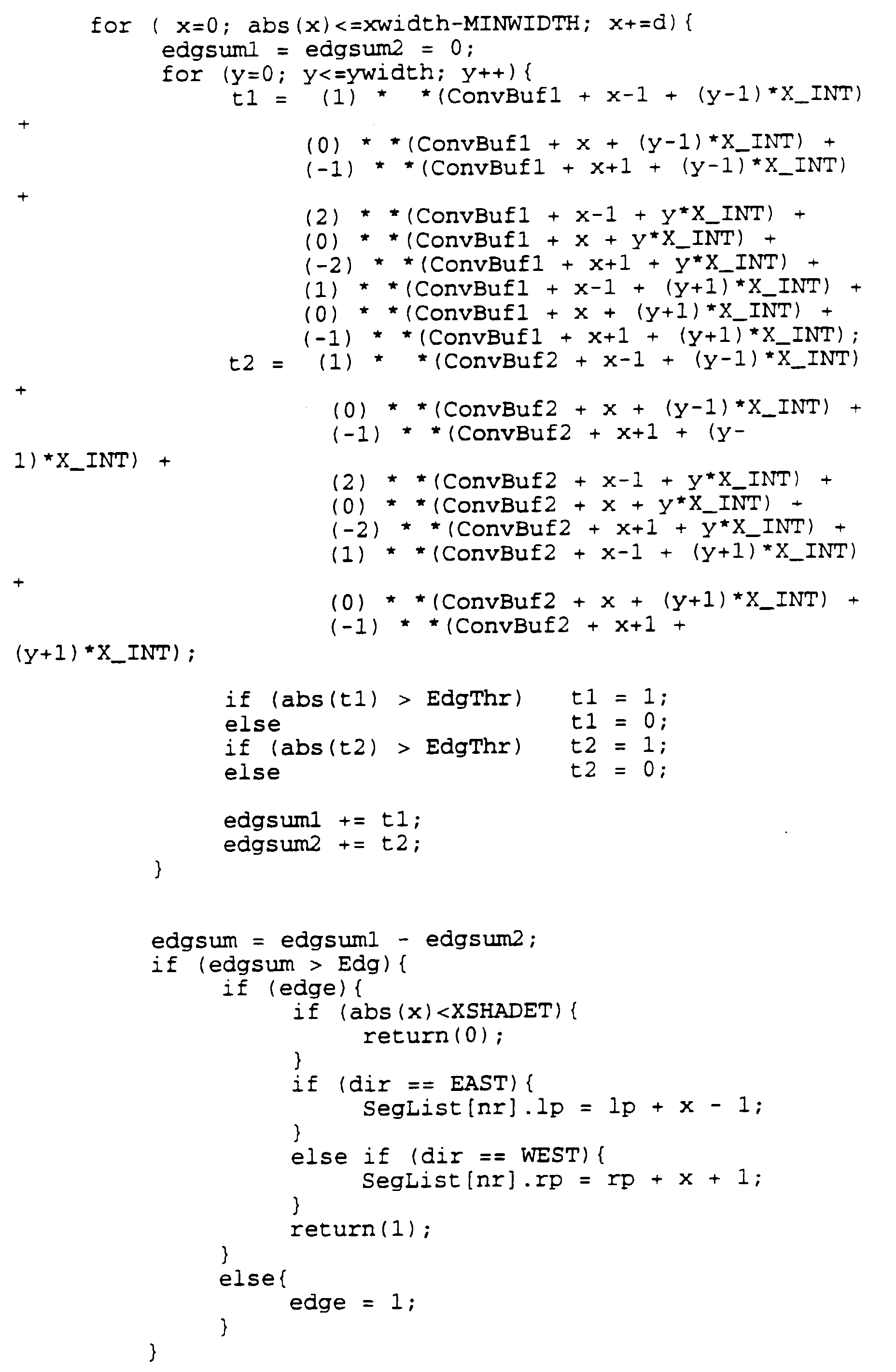

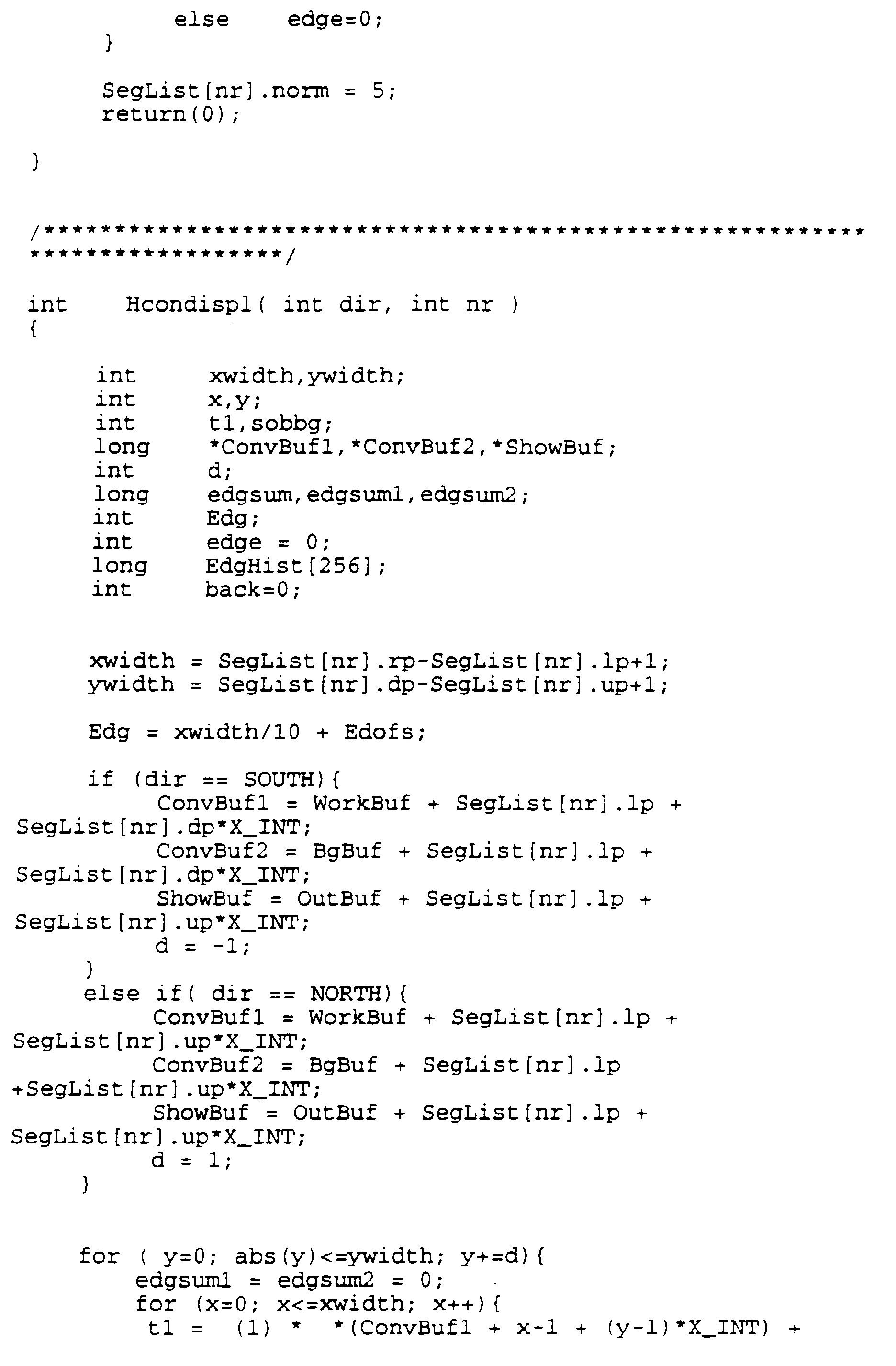

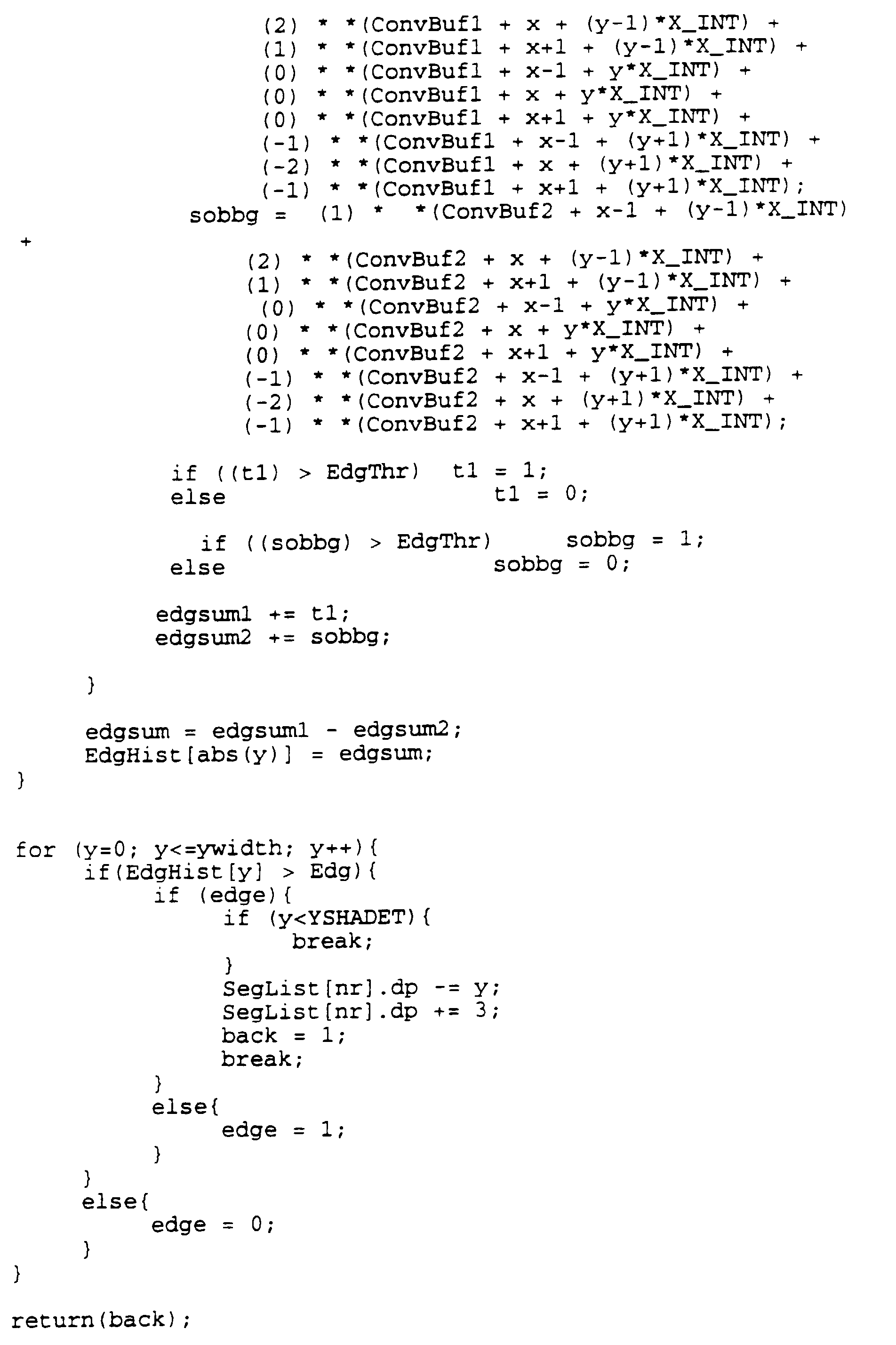

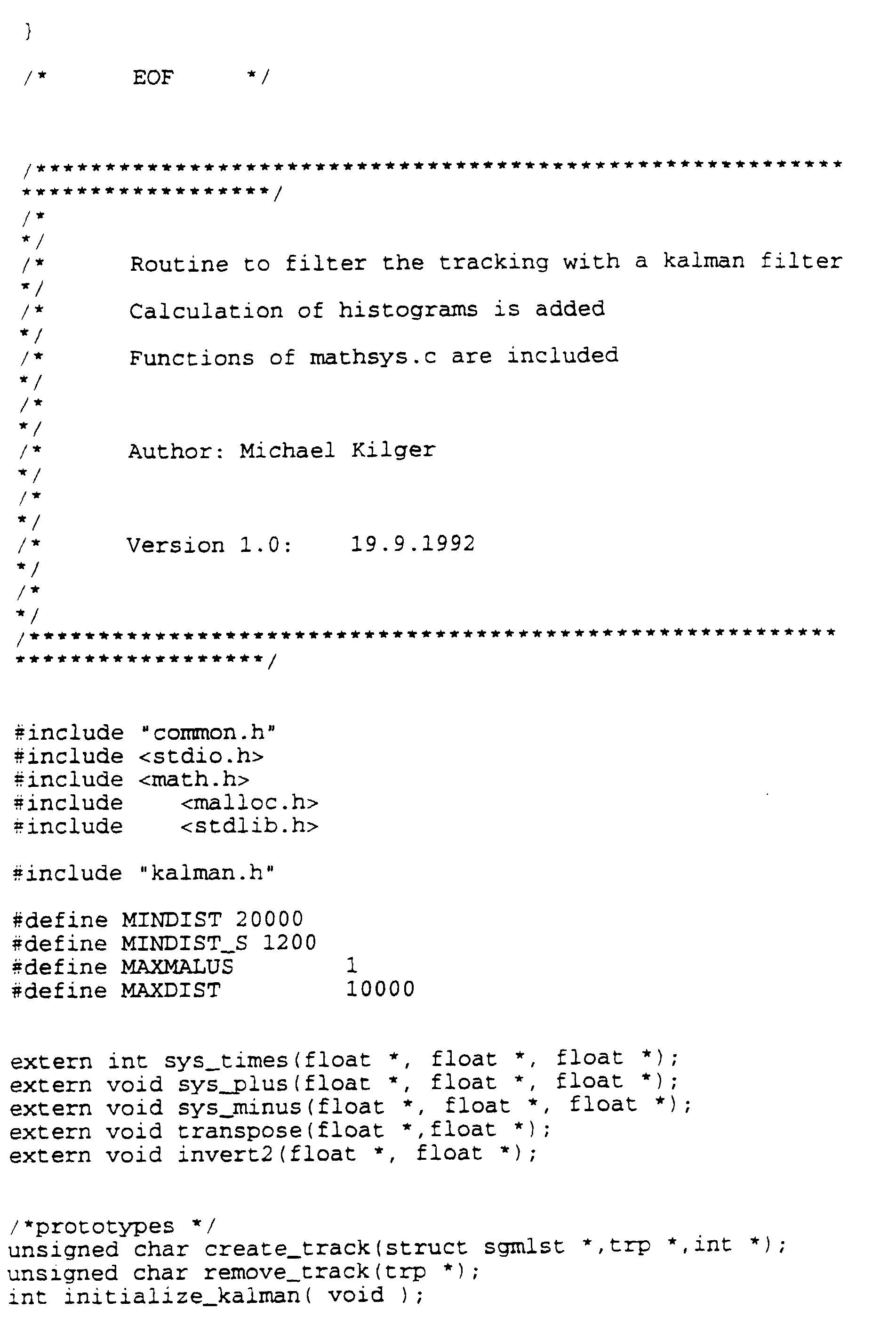

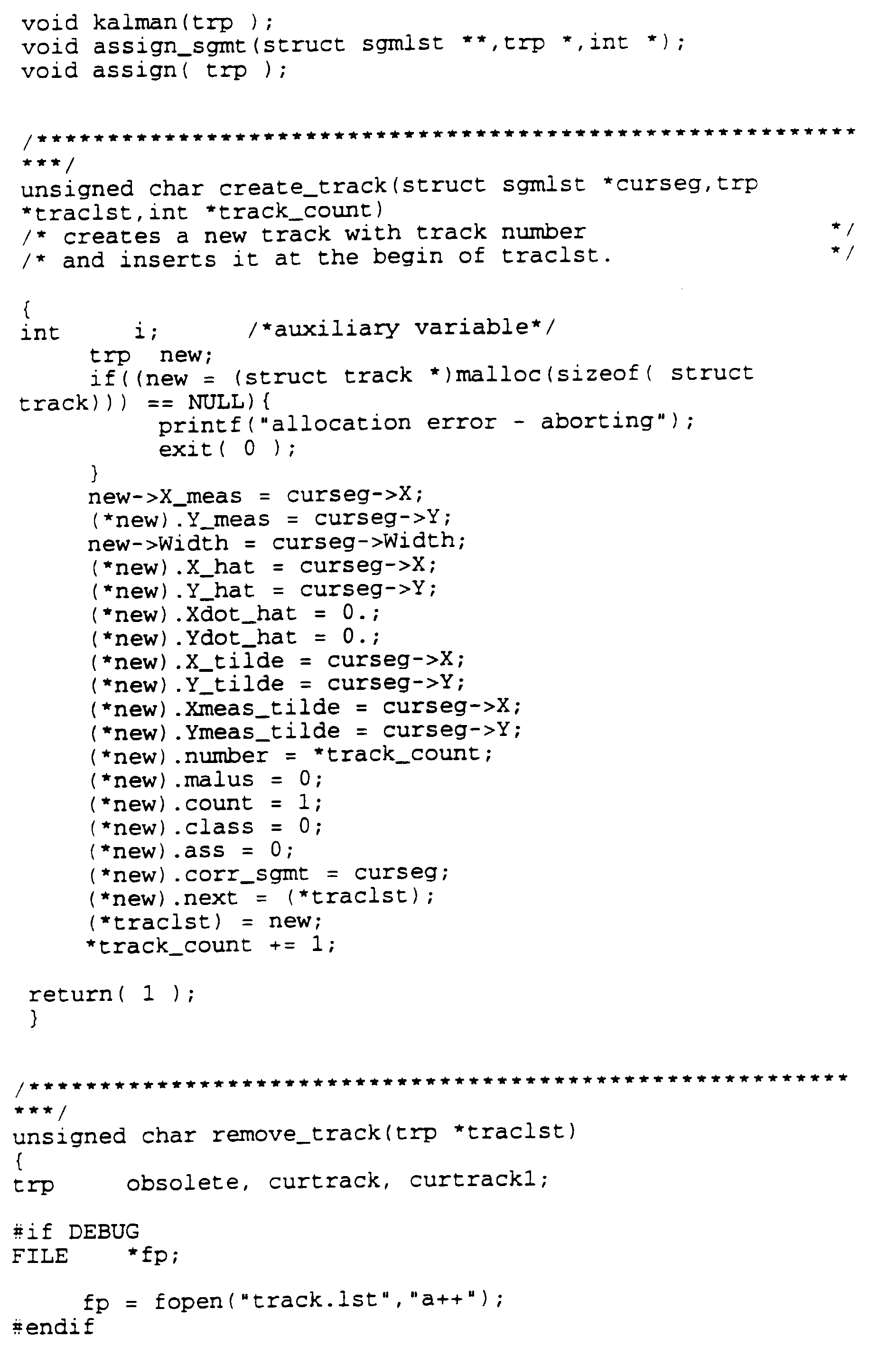

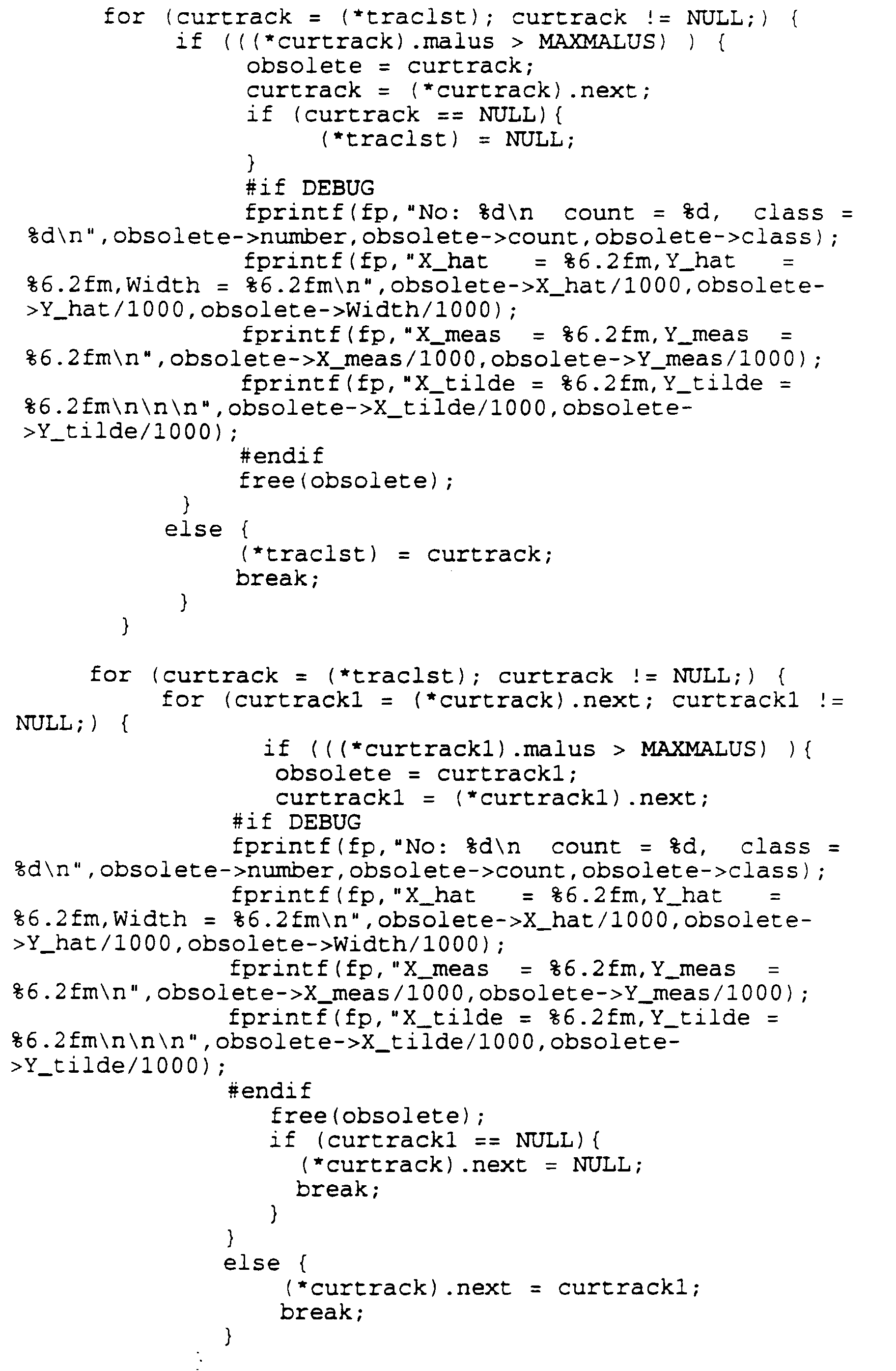

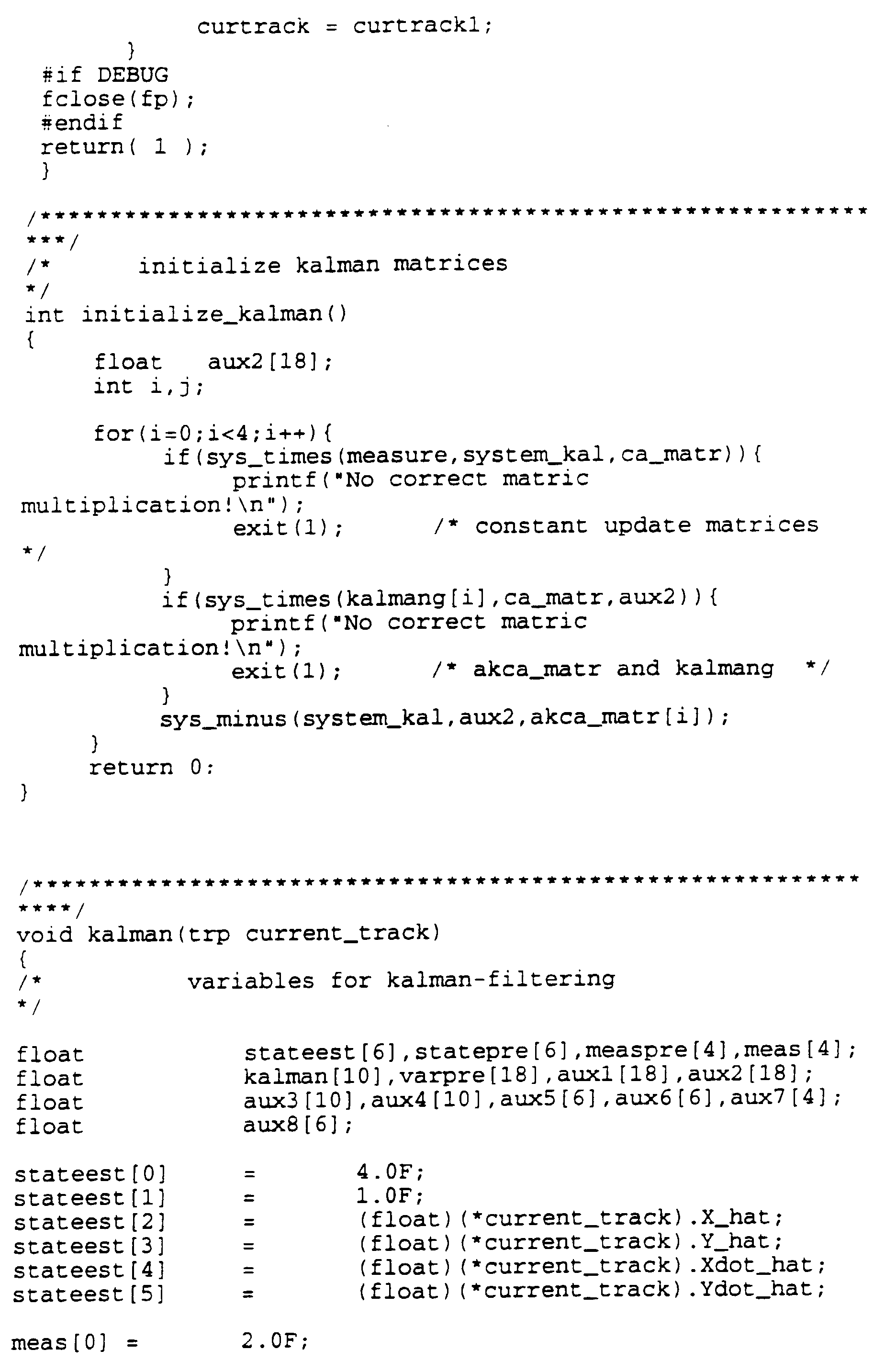

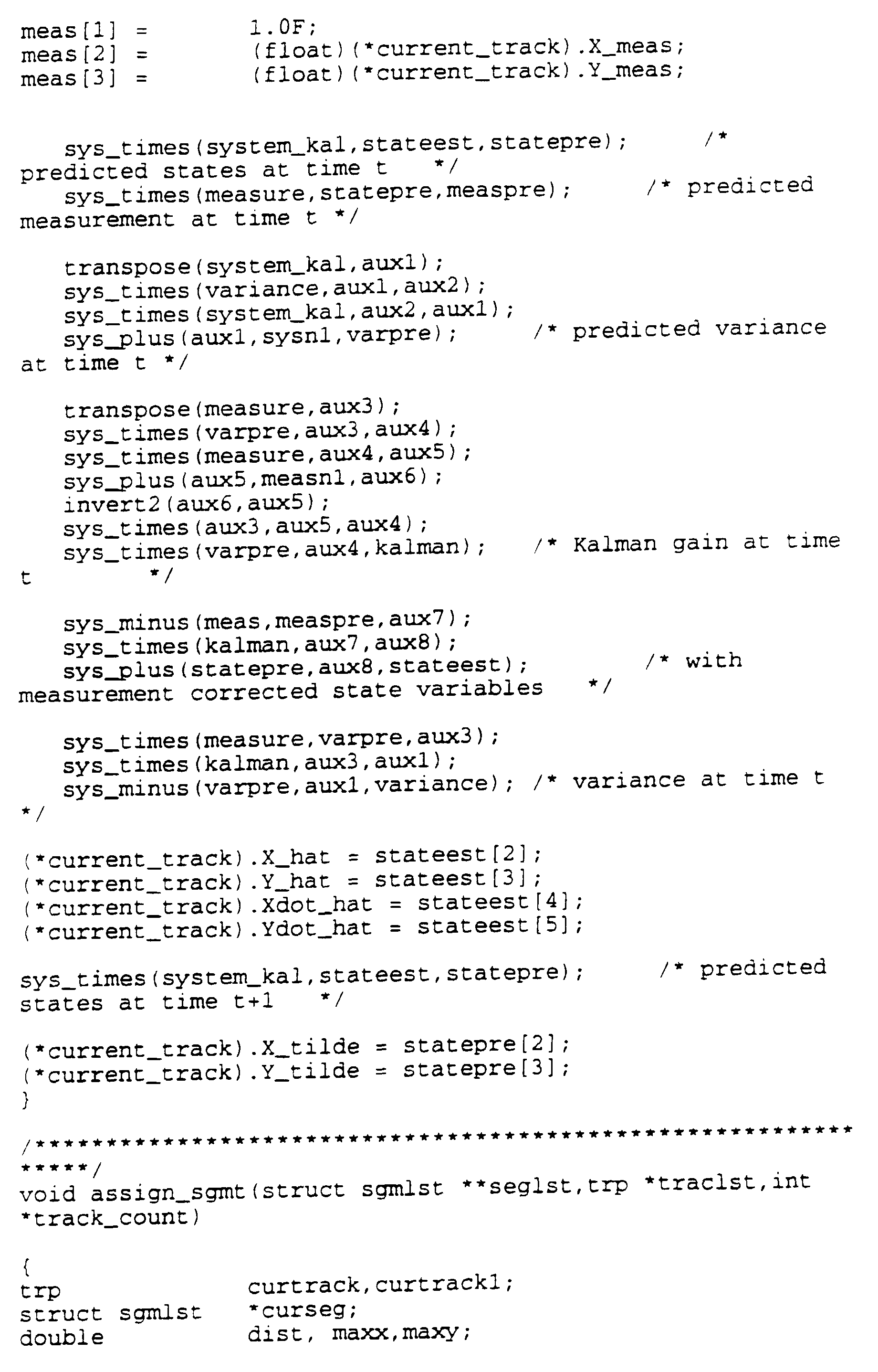

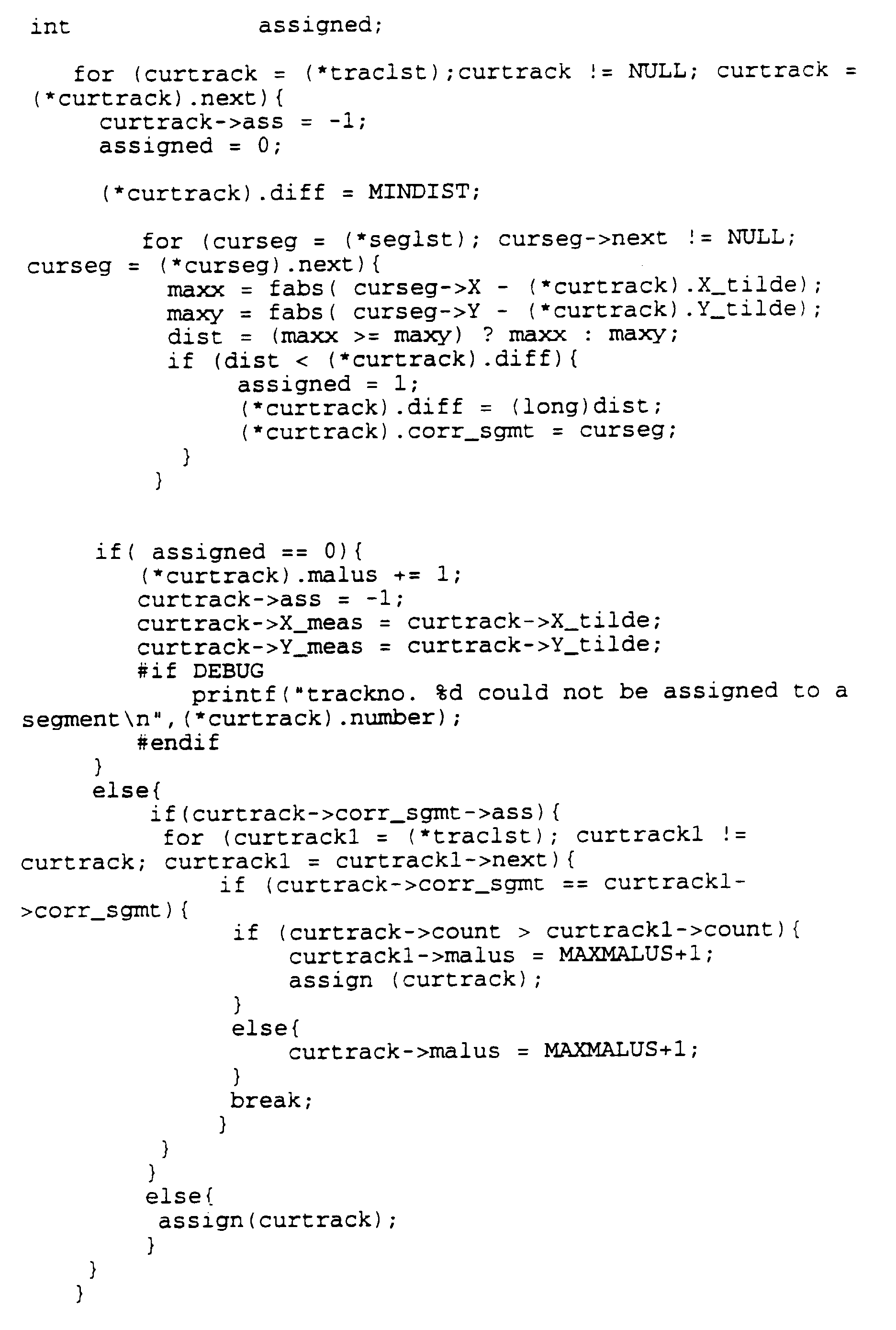

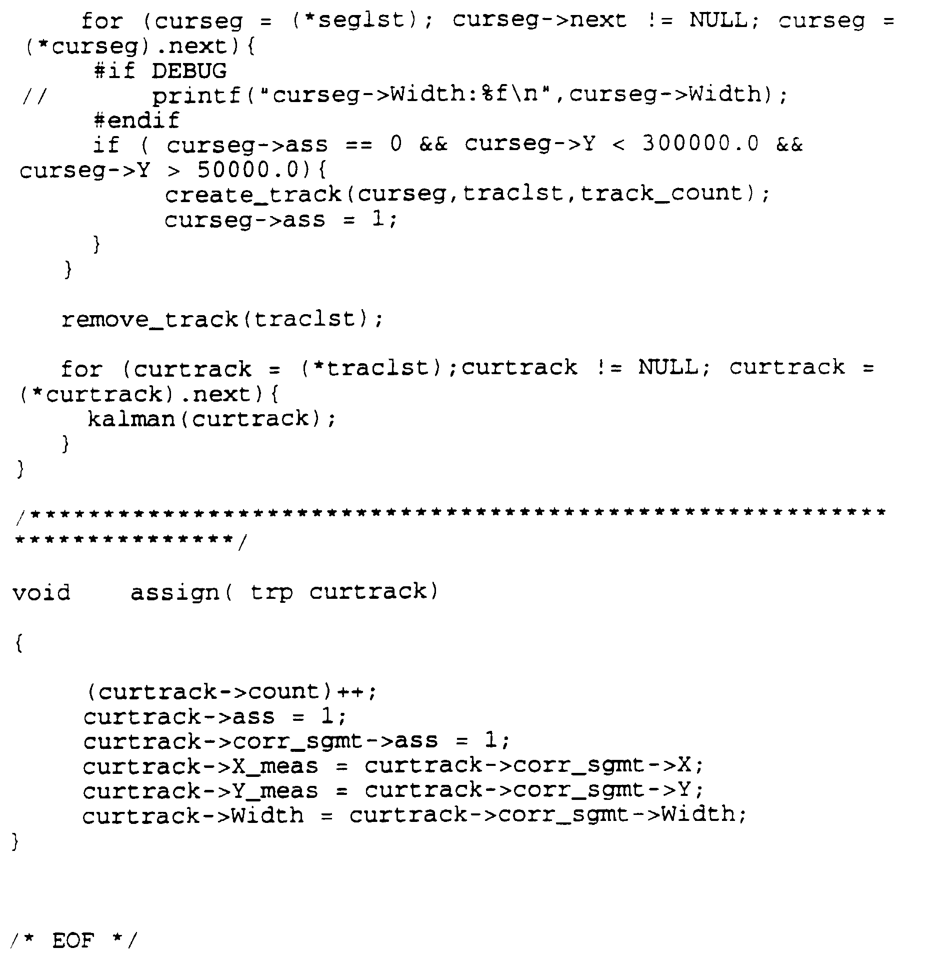

## Patentansprüche

1. Verfahren zur Detektion und Abspaltung des Schattens (18, 19, 110) sich bewegender Objekte (14, 15, 16, 17) in einer digitalen Bildsequenz mit folgenden Schritten:
a) aus der Bildsequenz wird eine Sequenz von Hintergrundbildern ermittelt, welche nur den unbewegten Bildhintergrund der Bildsequenz, nicht aber die bewegten Objekte enthält;
b) zur Extraktion von Objektkanten (11-19, 110) wird zu jedem Bild der Bildsequenz und zu dem jeweils entsprechenden Hintergrundbild der Hintergrundbildsequenz jeweils ein Kantengrauwertbild (111, 211) ermittelt;
c) durch vertikale bzw. horizontale Projektion dieser Kantengrauwertbilder werden jeweils entsprechende vertikale bzw. horizontale Kantenhistogramme (HH1, HH2, HV1, HV2) zu den Kantengrauwertbildern ermittelt;
d) Kanten, die nicht zu Bewegtobjekten oder Schatten gehören (21, 22, 23) werden eliminiert, indem die Kantenhistogramme eines Hintergrundbildes von den entsprechenden Kantenhistogrammen des zum gleichen Zeitpunkt gehörenden Bildes der Bildsequenz subtrahiert werden (ADD);
e) die auf diese Weise gebildeten Differenzkantenhistogramme (HH3,HV3) werden einer Schwellwertentscheidung (SWE) unterworfen, wodurch diejenigen Kanten eliminiert werden (315), welche nicht den eigentlichen Bewegtobjekten, sondern einem Schatten eines sich bewegenden Objekts entsprechen.

2. Verfahren nach Anspruch 1, bei dem die Kantengrauwertbilder vor der Ermittelung der Kantenhistogramme binarisiert werden.

3. Verfahren nach einem der vorhergehenden Ansprüche, bei dem vor der Durchführung der Schritte b) bis e) des Anspruchs 1 diejenigen Bildbereiche ermittelt werden, welche bewegten Objekten - ggf. einschließlich ihres Schattens-entsprechen, und bei dem die Schritte b) bis e) nur auf diese Bildbereiche angewendet werden.

4. Verfahren nach einem der vorhergehenden Ansprüche, bei dem aus den Kantenhistogrammen, die zu ein und demselben Bewegtobjekt gehören, eine zeitliche Folge von Kantenhistogrammen gebildet wird, und bei dem die Elimination von Schattenkanten durch eine Identifikation und zeitlichen Verfolgung entsprechender Kanten verbessert wird.

5. Verfahren nach einem der vorhergehenden Ansprüche, bei dem die Elimination von Schattenkanten durch Auswertung eines Vorwissens über die Seitenlage der Schattenkanten in bezug auf die Objektkanten verbessert wird.

6. Verfahren nach Anspruch 4 in Verbindung mit Anspruch 5, bei dem das Vorwissen über die Seitenlage der Schattenkanten in adaptiver Weise mit dem zeitlichen Ablauf des Verfahrens erlernt und fortlaufend überprüft wird.

## Claims

1. Method for detecting and separating the shadow (18, 19, 110) of moving objects (14, 15, 16, 17) in a sequence of digital images, having the following steps:
a) a sequence of background images is determined from the sequence of images, the said sequence of background images containing only the non-moving image background of the sequence of images but not the moving objects;
b) for extracting object edges (11-19, 110), in each case an edge grey-value image (111, 211) is determined for each image of the sequence of images and for each respective corresponding background image of the sequence of background images;
c) by means of vertical or horizontal projection of the said edge grey-value images, corresponding vertical or horizontal edge histograms (HH1, HH2, HV1, HV2) are determined in each case for the edge grey-value images;
d) edges which do not belong to moving objects or shadows (21, 22, 23) are eliminated, in that the edge histograms of a background image are subtracted from the corresponding edge histograms of the image, belonging to the same instant, of the sequence of images (ADD);
e) the differential edge histograms (HH3, HV3) formed in this manner are subjected to a threshold value discrimination (SWE), by which means those edges are eliminated (315) which do not correspond to the actual moving objects but rather to a shadow of a moving object.

2. Method according to Claim 1, in which the edge grey-value images are put into binary form before the determination of the edge histograms.

3. Method according to one of the preceding claims in which, before carrying out steps b) to e) of Claim 1, those image regions are determined which correspond to moving objects - if appropriate including their shadow-and in which steps b) to e) are applied only to these image regions.

4. Method according to one of the preceding claims, in which a time sequence of edge histograms is formed from the edge histograms which belong to one and the same moving object, and in which the elimination of shadow edges is improved by means of an identification and time tracking of corresponding edges.

5. Method according to one of the preceding claims, in which the elimination of shadow edges is improved by evaluating a preknowledge about the lateral position of the shadow edges with reference to the object edges.

6. Method according to Claim 4 in conjunction with Claim 5, in which the preknowledge about the lateral position of the shadow edges is learned in an adaptive manner using the time sequence of the method and is continuously checked.

## Revendications

1. Procédé de détection et d'élimination de l'ombre (18, 19, 110) d'objets en mouvement (14, 15, 16, 17) dans une séquence d'images numérisées, comprenant les phases suivantes :
a) à partir de la séquence d'images, on détermine une séquence d'images de fond qui ne contient que le fond d'image immobile de la séquence d'images, mais pas les objets en mouvement ;
b) pour extraire des bords d'objet (11 - 19, 110), on détermine pour chaque image de la séquence d'images et pour l'image de fond correspondante de la séquence d'images de fond respectivement une image de bords en demi-teintes (111, 211) ;
c) par projection verticale resp. horizontale de ces images de bords en demi-teintes, on calcule des histogrammes de bords verticaux resp. horizontaux (HH1, HH2, HV1, HV2) qui correspondent auxdites images de bords en demi-teintes ;
d) on élimine les bords n'appartenant pas à des objets en mouvement ou à des ombres (21, 22, 23) en soustrayant les histogrammes de bords d'une image de fond des histogrammes de bords correspondant à l'image du même instant de la séquence d'images (ADD) ;
e) on soumet les histogrammes de bords de différence (HH3, HV3) ainsi formés à une décision à seuil (SWE) qui permet d'éliminer les bords (315) qui ne correspondent pas aux objets en mouvement proprement dits, mais à une ombre d'un objet en mouvement.

2. Procédé selon la revendication 1, dans lequel les images de bords en demi-teintes sont représentées en binaire, avant de calculer les histogrammes de bords.

3. Procédé selon l'une quelconque des revendications précédentes, dans lequel on détermine avant l'exécution des phases b) à e) de la revendication 1 les zones d'image correspondant à des objets en mouvement - le cas échéant y compris leur ombre -, et dans lequel on applique les phases b) à e) uniquement à ces zones d'image.

4. Procédé selon l'une quelconque des revendications précédentes, dans lequel on forme une séquence chronologique d'histogrammes de bords à partir des histogrammes de bords appartenant à un seul et même objet en mouvement, et dans lequel l'élimination des bords d'ombre est améliorée grâce à une identification et un suivi chronologique de bords correspondants.

5. Procédé selon l'une quelconque des revendications précédentes, dans lequel l'élimination des bords d'ombre est améliorée grâce à l'analyse d'une connaissance de la position latérale des bords d'ombre par rapport aux bords d'objet.

6. Procédé selon la revendication 4 en rapport avec la revendication 5, dans lequel la connaissance de la position latérale des bords d'ombre est acquise de manière adaptive au fur et à mesure du déroulement du procédé dans le temps, et contrôlée en permanence.
